# EUROPEAN PATENT SPECIFICATION

(11) **EP 3 470 667 B1**
(45) Date of publication and mention of the grant of the patent: **04.10.2023**
(21) Application number: 17809774.7
(22) Date of filing: 05.06.2017
(51) Int. Cl.: F03D 1/06, F03D 9/18, F03D 13/25, F03D 15/00, F03D 7/02

(54) **AUTONOMOUS SUSTAINABLE WIND UNIT, MULTI-BLADE RETICULAR ROTOR, ENERGY ACCUMULATOR AND ENERGY CONVERTER AND USES**
AUTONOME NACHHALTIGE WINDEINHEIT, NETZARTIGER MEHRFLÜGELROTOR, ENERGIEAKKUMULATOR UND ENERGIEWANDLER UND VERWENDUNGEN
UNITÉ ÉOLIENNE DURABLE AUTONOME, ROTOR RÉTICULAIRE MULTIPALE, ACCUMULATEUR ET CONVERTISSEUR ÉNERGÉTIQUES ET APPLICATIONS

(30) Priority: 08.06.2016 ES 201600477
(43) Date of publication of application: 17.04.2019
(73) Proprietor: González Pérez, Adolfo, 28020 Madrid (ES)
(72) Inventor: González Pérez, Adolfo, 28020 Madrid (ES)
(74) Representative: Espiell Gomez, Ignacio
(86) International application number: PCT/ES2017/000068
(87) International publication number: WO 2017/212086

(56) References cited:
- WO-A1-92/14054
- WO-A1-99/41498
- WO-A1-2015/059320
- WO-A1-2015/059320
- WO-A1-2015/107236
- WO-A2-2010/135484
- DE-A1- 2 901 997
- US-A- 4 330 714
- US-A- 5 436 508
- US-A1- 2007 220 889
- US-A1- 2008 134 681
- US-A1- 2012 001 436
- US-A1- 2014 224 447

## Description

### A. - INTRODUCTION

An autonomous wind turbine with energy accumulation is disclosed in WO2015/059320 A1.

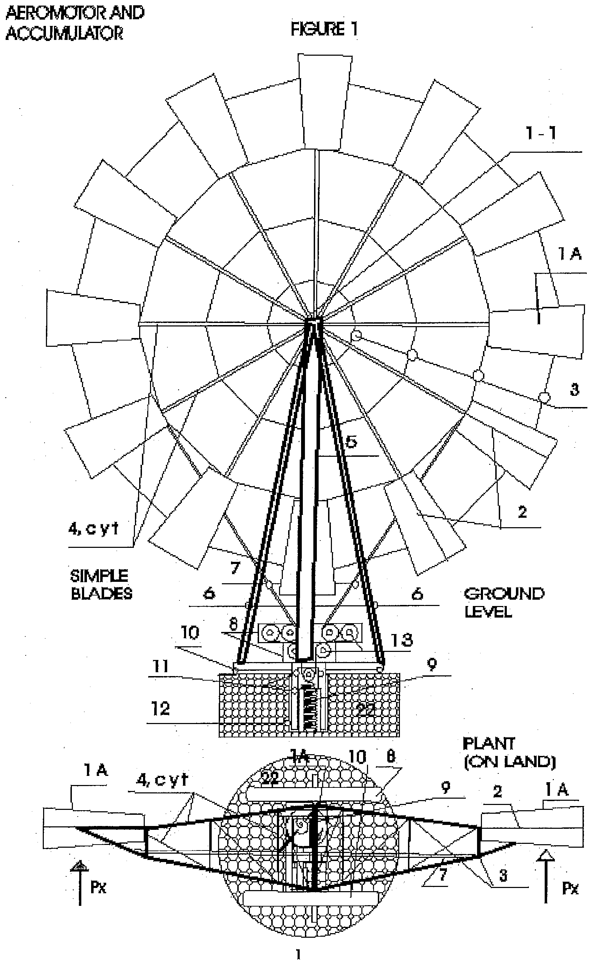

This patent application has for objet the project and execution of an **"Autonomous sustainable wind unit, reticular multi-blade rotor, accumulator and energy converter and applications".** in other words, an **"autonomous energy unit",** operational as a generating, accumulating, transforming and distributing source of thermal and mechanical energy, compounded of a horizontal axis rotor windmill on a cable-stayed **tower** located on a **base platform,** with the receiver devices of the transmitted torque, by means of a direct linear **transmission belt,** from the rotor to the pulleys and shafts of torque-receiving devices and **converters in heated steam,** in closed circuit with the **thermal accumulator,** which will rotate, depending on the **wind direction,** by means of a cylinder, in its lower base, on the inside of another cylinder embedded in the **foundation,** which serves as a **foundation** on the ground and as a floating **platform** in the sea, and in both cases, as **a stationary** or **mobile thermal accumulator,** tank-type on land or ship-type at sea, for the **distribution, autonomously and continuously,** of the **thermal energy** of the **water vapor** through duct networks of under pressure **water vapor,** and of **mechanical energy** by the **transformation** of the **heat** of **water vapor** by using **endothermic turbines,** all for a global energy supply in any circumstance and place, **(see** **figures 1 to 6****.**

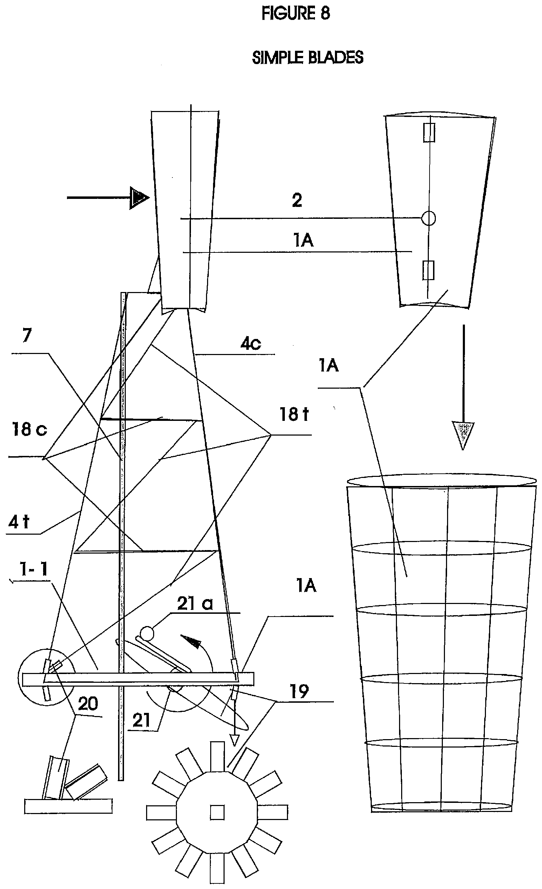

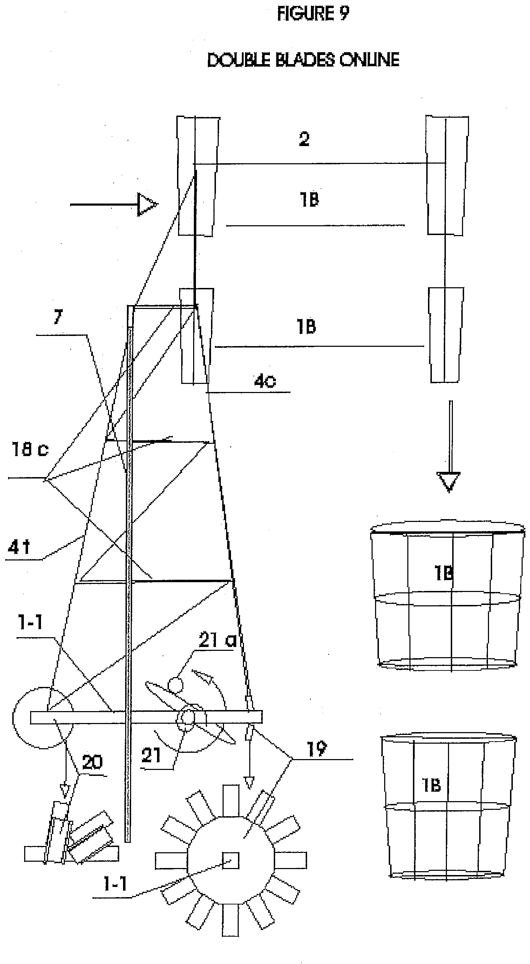

The **rotor** is made of **radial lattice trusses,** latticework, welded and braced with compression buckling resistance in normal and transverse directions, assembled with a wide edge on the horizontal axis of the rotor, **(see** **figures 1****,** **2** **and** **3****),** equipped with **aerodynamic blades,** eccentrically **articulated,** in the end sections of each truss, **(see** **figures 8****,** **9** **and** **10****),** and **spring** regulator of power and efforts.

With the eccentricity of the articulation, the blades tend to rotate, depending on the wind speed, in direction of the side **(L1)** of greater area, at the same time as the **spring** counteracts it, until it reaches a state of equilibrium of the thrust with nominal components, normal and tangential to the rotor plane previously determined. Moreover, if a nominal speed of rotation of the pulley shaft is maintained with the control of the pressure between the discs of the converter, a nominal speed of the rotor is obtained, that is to say that the nominal values of the thrusts remain fixed, normal and tangential of the wind on the rotor, so that at any wind speed the power is maintained and the thrusts set as nominal.

The **eccentric pressure** of the air on the blades is **proportional to the square** of its velocity **(p = 0.06 V²),** and the **effective surface** of the blades on which it presses, is the normal projection to the direction of the wind, which **decreases** in function of the increase of the **angle (a)** of the blades with the rotor plane and consequently the resulting **pressure** on the blade **decreases,** which is **inversely proportional to the square** of the cosine of the **angle (a).**

The relationship between the **cosine,** that is **to say** the **angle (a)** and the **speed (V)** of the wind is a **constant,** so that at **each speed** corresponds an **angle (a),** with a certain eccentric **pressure** on the blades, which can be stabilized by providing a **spring,** whose **action** on the blade is proportional to its **deformation,** so that each wind speed is an angle of equilibrium in which the normal actions (push on the support) and tangential (torque of the rotor) produce an action that is equal to a reaction of the spring. In other words, when the deformation of the spring reaches a certain angle, the differential pressure of the wind and the resistance spring, are equalized.

The calculation determined by the values of the previous parameters has no need to be included because it's not to be claimed.

That is to say that all efforts on the components and the power of the wind turbine can be automatically limited.

For wind speeds below nominal, the angle (a), of incidence of the blade is fixed by the provided stop and, the generated power will be the one corresponding to the formula **W = kR²V³,** less than the nominal.

The **tangential component of the thrust** of the wind on the blades, produces the rotation of the rotor, generating a **torque** that is **transmitted,** by friction, **(see** **figures 1****,** **2****,** **3** **and** **7****),** and drag of a transmission belt, **(7)** located between a previously selected series of perimeter knots of the trusses, on the same level, and **varied** pulleys located on the **base platform.**

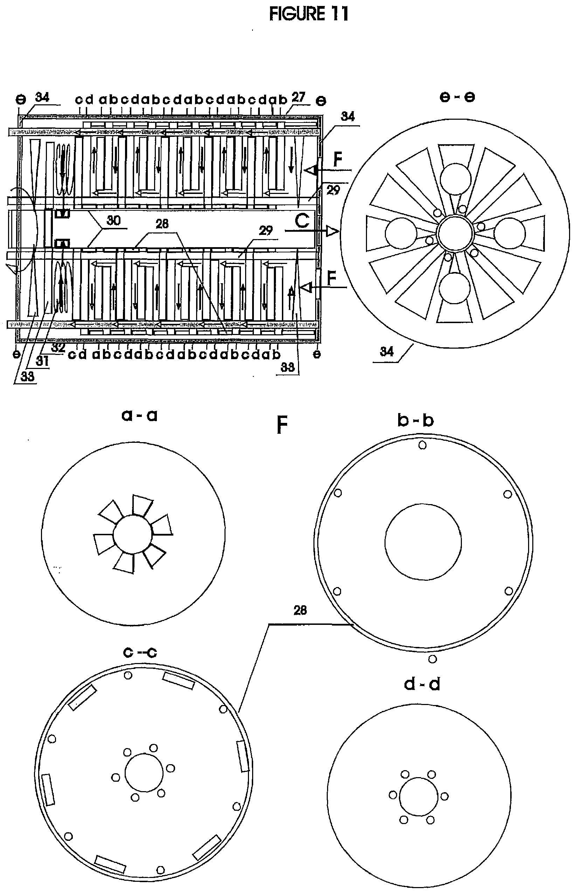

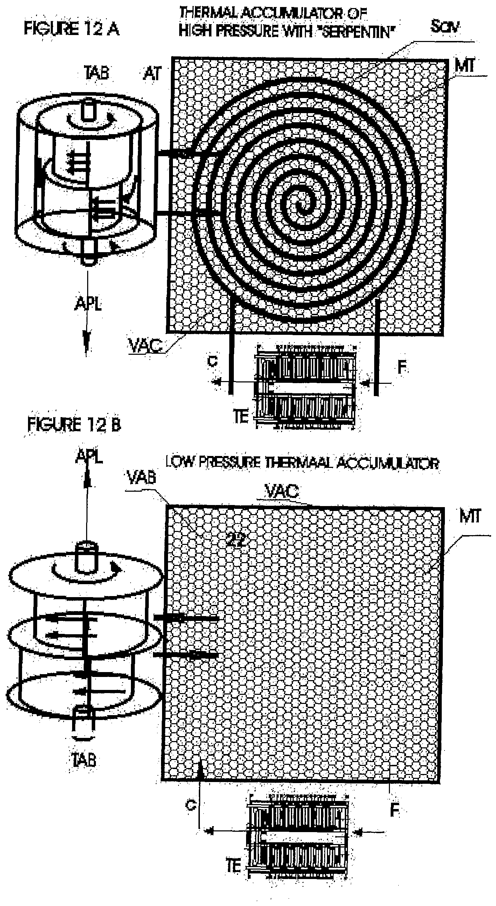

The axes of the pulleys transmit the energy of the rotor to the diverse mechanisms of direct application or by distribution, **through networks of steam of water heated in the multi-disk converter (see** **figure 11****),** and transmitted to the **accumulator, (see** **figure 12A and 12B****)** , for later extraction, previous installation of an indoor **"coil"** to provide **water vapor** at high pressures in addition to the generated high temperatures for direct thermal use or transformation into mechanical energy, with distribution "according to the needs", in any circumstance and place.

The practical applications will be of direct mechanical type or thermal type by conversion of the mechanical torque in heat, between whose **applications** they emphasize those of the **torque converters** of the **pulleys** in **thermal energy,** by the friction of two series of internal thermal discs, of reverse rotation, resistant to abrasion and temperature, through the internal circulation of **steam distillation,** in a closed circuit, **(see** **figure 11****),** with the **thermal accumulator.**

The required next phase is that the thermal energy generated in the converter thermal **energy** has to be allowed to be used directly, in various ways; discontinuous according to the wind; or **indirect** continuous use, **thermally or mechanically,** according to **"needs",** previous **storage,** in a closed circuit, located in the interior of the **foundation,** which by its mass and volume serves at **the same time as a foundation** and thermal accumulator, composed of heat-resistant material, ceramic or similar, from which the **heat** can be **extracted, (see** **Figures 12A and 12B****),** directly or mechanical work prior **transformation,** with the **endothermic turbine.**

The **accumulator (see** **figures 12A, 12B** **and 22**), is a broad, watertight and permeable enclosure, filled with thermal material, which allows the internal circulation of water vapor, capable of absorbing or releasing heat depending on the characteristics of the circulating **water steam.**

At the same time the accumulator has the peculiarity of functioning (although always on high temperatures) in two different ways: either at low pressures of the atmospheric order, or at high pressures with the internal arrangement of a conventional **"coil" (Sav).In** both cases, it is possible to have networks of nearby **thermal distributions, "in situ",** and also at a **distance** for all kinds of applications at destination. As it will be specified below, at low pressures the first element of the turbine works in compression, and the second will work at expansion; and with high pressures the first works to expansion and the second to compression, **(T2a).**

**The endothermic turbine,** constitute *"processes with water vapor cooling and its partial contraction to liquid state when the pressure is higher than the one corresponding to the room temperature of the **"water vapor",*** in which the loss of heat and pressure are transformed into mechanical work, continuously or "according to needs". In thermodynamics it is defined as an **endothermic** process.

This is one of the peculiar and exclusive powers of **water vapor.**

In conclusion, the **Wind Unit** formed and described, as a complete, solidary and unitary set, is characterized as it fulfills the necessary and sufficient conditions to become an **Autonomous Wind Unit, (see** **figures 1a16**).

The proof of this is in the chain process of interdependent natural links, where each and every one of them is necessary and sufficient to constitute the so-called autonomous unit. Another issue is the guarantee of the service, or the characteristics of the background, which lead to exceptional situations of **emergency, maintenance or replacement,** being forced to resort to collaboration or replacement by other sources of energy or processes.

Another recurring situation is the **modality** of the **required energy,** such as static, dynamic, mechanical or chemical transformer, such as **desalination, hydrolysis** to obtain hydrogen fuel, etc., in which case, as will be explained further in this same document, alternatives for these **exceptional** cases **are included.**

Lastly, the endothermic turbine has a double function of transforming the thermal energy of **water vapor** at low and high pressures, predominating the second in the wind and alternative emergency areas, such as steady and mobile nuclear power plants, and the second in open spaces, with the **environmental endothermic turbine,** the turbo-jet for **water vapor** drive and the internal combustion assistance.

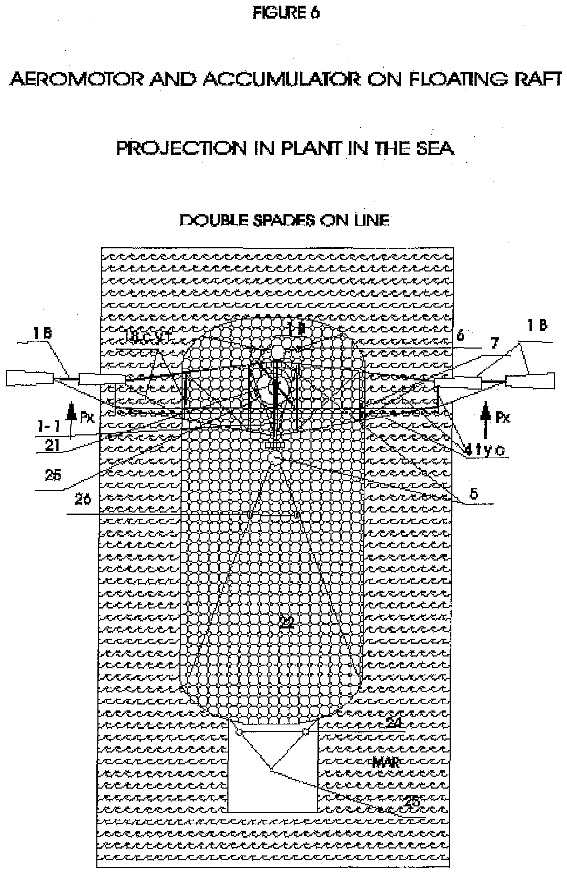

In conclusion, the patent consists of the following elements:
**1)**. The upper **support or tower,** made out of vertical pillars and inclined braces, **(see figures from 1 to 6),** on the **base platform,** supports the weight of the mill and the **overturning actions of the thrusts** and actions of the wind on the axis of the rotor, and determines its orientation in the right direction according to the wind direction.
   On the **ground** wind turbines, the orientation of the turbine plane in the direction that follows the wind is obtained with the rotation of the **base platform (see** **figures 1****).**
**2)** The base platform constitutes the support of the tower, or support, and also the location of all the mechanisms and auxiliary and control means supported on a rotating cylindrical pivot, inside a cylinder embedded in the base, which in turn serves to facilitate the rotor orientation depending on the convenient direction of the wind. In the **sea windmills,** the lift and the orientation are constituted by the floating **base** raft, which revolves around the anchorage of the bottom, as a ship, and the orientation is obtained by the push of the wind in the direction that follows the plane of the rotor. The raft has multiple functions, **a),** as base flotation **platform, b), thermal accumulator** (preferably ceramic, due to its lower density and its great permeability in the interior, **c),** adaptation as a **tugboat and ship in construction in port or berth, locations and transfers,** as an accumulator and distribution cistern, **d),** operation base for desalination of seawater, installation of required maritime services, etc., **(see** **figures 6****,** **7** **and** **8****).**

In both cases, land and sea, the alternative of **low** turbine with the rotor located at the **height closest to the base** is adopted, with less overturning moment and easier assembly, handling and maintenance, **(see** **figures 1****,** **2****,** **3****,** **6****, and** **7****).**

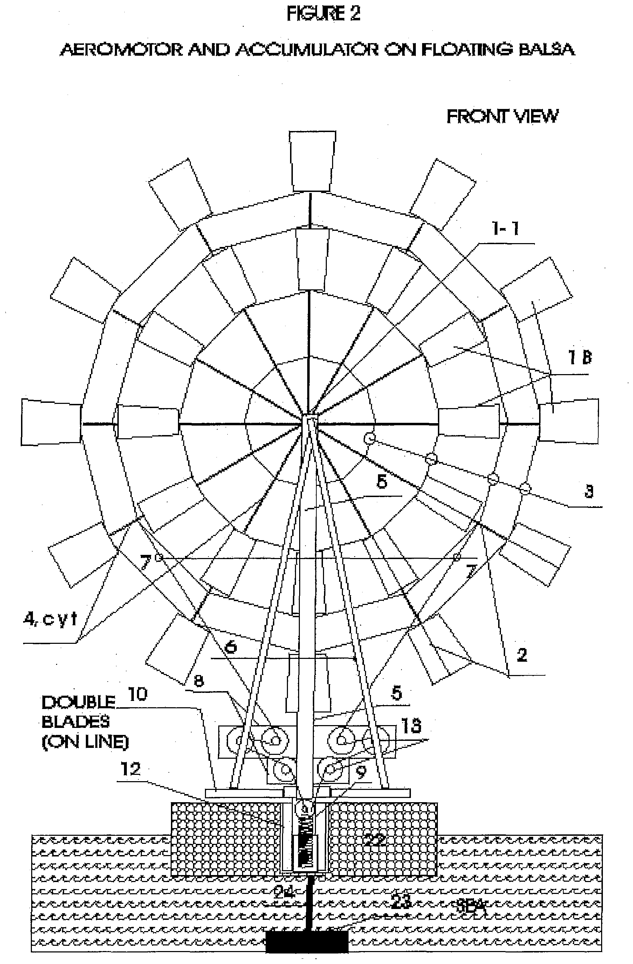

**3)** The **foundation** that has to support its own weight and the moment corresponding to the normal thrust, **(Px)** of the wind, on the rotor plane, by the height of the axis in all the directions, requires a structure that, by mass and volume can be used at the same time as a thermal energy **accumulator,** fed directly by the **energy converters** of the receiver mechanisms, by means of **water vapor,** at low pressure and high temperature, in a closed circuit, **(see** **figures 1** **and** **2****).**

The **rotor** is a **grid structure,** in latticework, with **radial trusses** in a **cantilever,** with a wide **edge** on the axis of the rotor whose planes is parallel to it, constructed with welded bars, a square section hollow and braced together and transversally, **(see** **figures 1** **and** **6****).** Being normally made out of steel, profiles of square hollow bars are adopted because the **buckling** occurs only in two normal directions: in the planes parallel and normal to the axis of the rotor, **(see** **figures 1****,** **2** **and** **3****).** The experience in calculation of structures guarantees that the reticular conformation of linear elements is a good solution due to its lightness and resistance. **5)** The **blades,** which could be considered as the **most relevant pieces** within this project, are built with narrow, almost flat aerodynamic profiles and radial trapezoidal plant, of resistant material, suspended and articulated at the end of each truss. The widths of the blade on either side of the articulated clamping axis are different and also the wind pressure on them, so it tends to rotate normally to the wider side, until reaching the **balance** between the difference of the pressure of both sides and the reaction to the rotation of a **spring** located in the articulation, **(see** **figures 8****,** **9** **and** **10****).**

With a **higher speed** of the **wind, greater rotation** and angle of incidence or blade-cut with regard to the plane of the rotor is obtained, and consequently a smaller blade **surface** according to the wind and a **lower torque** or rotation **thrust, (see** **figures 1 to 5** **and** **8 to 10**).

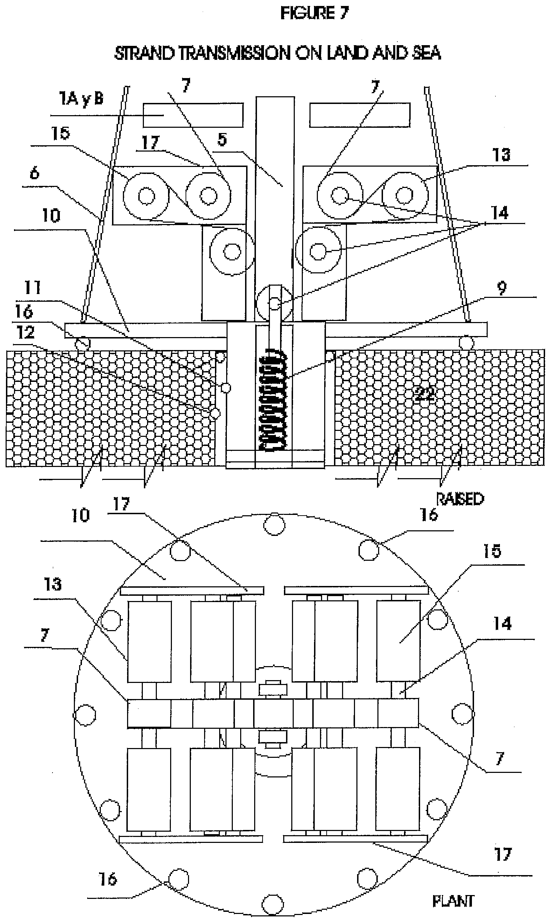

The resulting **normal pressure** on the **blade** surface can be decomposed into two forces, one normal and the other tangential to the plane of the rotor. The **first** generates a normal thrust on the rotor and at the same time that the moment of **overturning** on the support. The **second,** by tangential thrust in the plane of the rotor, generates a torque on the set of blades, that is to say a pressure by a speed of drag on the **knots** of the **trusses,** and, by contact, on the **belt of transmission,** which it is equivalent to the **power generated** by the rotor, **(see** **figure 7****).**

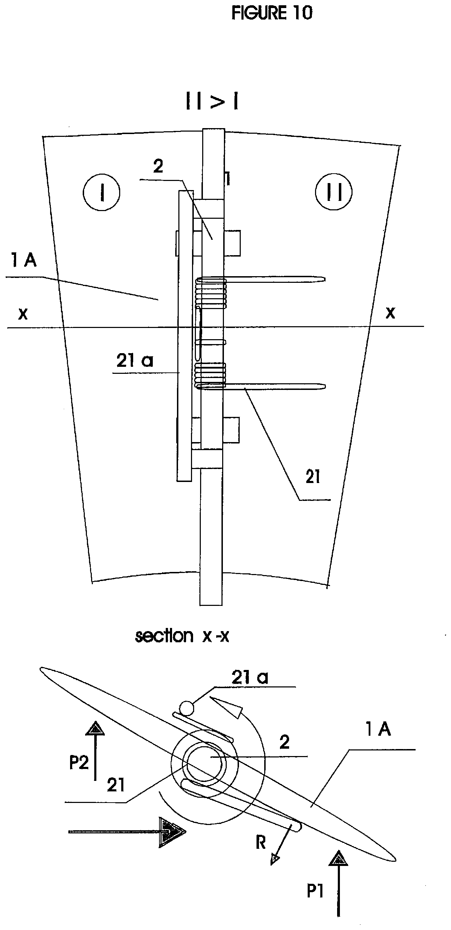

The difference of the normal pressure to the surface of both sides of the blades, by execution, is equal to the reaction of the corresponding **spring.** The **calibrated spring** only acts along to velocities higher than the nominal design since the angle of **incidence,** by means of a stop, (21a), is initially **set** for lower speeds, that is, because at these speeds **the reaction** of the spring is **greater** than the **thrust** of the normal value of the wind, **(see** **figure 10****).**

If the wind is weaker than the nominal wind, since the **angle** of **incidence** is **steady,** the **normal thrust** on the blades will only depend on the **wind speed.**

The tangential pressure over the blades decreases with the speed of the wind and consequently **the speed** of rotation of **the rotor,** as long as the reaction of the receiving mechanisms are under control, in the case of the **friction disc** converter, which have a constant **friction** surface, with controllable pressure.-

The changes of speed and power do not alter the operation of the friction converters, as long as the speed is maintained within certain limits, with the particularity that the temperature can be constant if the **flow of water vapor** that must circulate through the **converters** is controlled.

The blades output, with adequate aerodynamic profile, depends on the total of their surfaces, which for convenience is determined as a percentage of the total area swept by the turbine, with application of a **form factor,** which in this case is similar to a lattice structure, in other words, under construction, of the order of **1.5.**

This **factor** is applicable in all directions, resulting in the total recommended surface **blade** being of the order of **0.25** of the swept surface.

For the relative dimensions between compression bars (by buckling) and tension bars, the **recommended** number would be **12 trusses,** and, as for the blades, in a radial direction these can be **single or double** and the same amount **(12).**

However, for models of large size blade, this can be divided into two, equally radial, with a separation equal to the **50%** of the average length of the two and a **sum surface** of both **80%** of the corresponding one to one single, which means that in addition to a **greater ease** of **execution** and **manipulation,** a **lower percentage** of the **blade** surface is obtained, in the case of **12** Units the **25%** and in the case of **24 Units** the **20%** of the area that is swept by the rotor.

Its execution consists of two thin sheets of metal, aluminum, stainless steel or galvanized steel, zinc, wood, plastic, etc., superimposed and separated by flanks made of aluminum, wood or similar, adopting a curved, **narrow and aerodynamic profile (see** **figures 8 to 10****).**

**6)** The **mechanical transmission** of the force torque captured by the rotor blades is carried out by means of a linear **transmission belt (7),** dragged by support and direct friction on a predetermined perimeter polygonal of truss knots, **(see** **figures 1****,** **2** **and** **3****),** and on a series of **pulleys,** whose axes transmit the pair motors of said energy. The quotients between the diameters of the polygon of the rotor and of the different pulleys determine the speed of rotation of the axes of the **mechanical receiving devices. (See** **figure 7****).** This set of polygonal, rollers and belt play the role of a gearbox of gears and pinions, planetariums, etc.

With these ratios, the high speeds of rotation of the different **receiving devices** are directly achieved, in comparison with those of the rotor, without the need the conventional bulky multiplier.

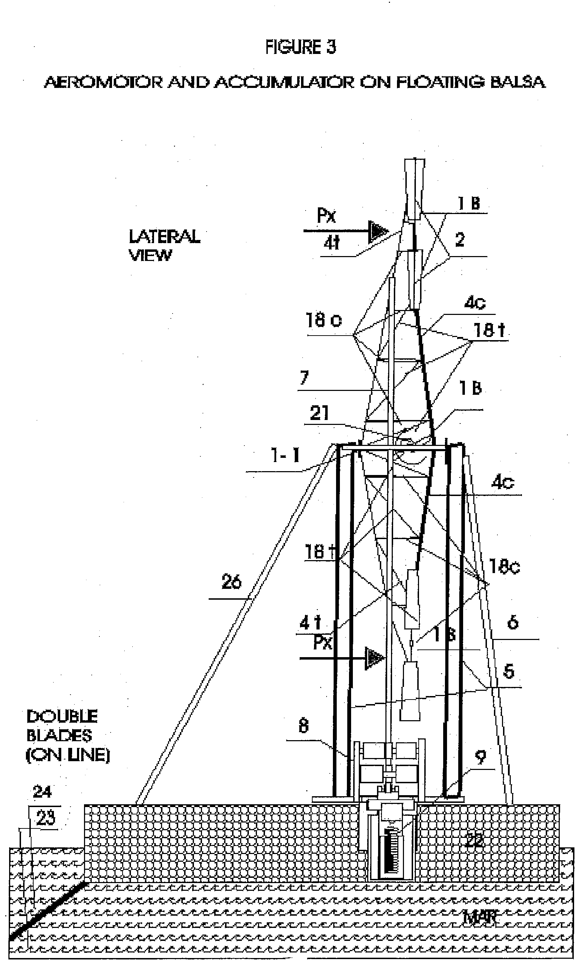

All these devices are easily arranged in the base platform, as well as the corresponding tensor of the belt to control the minimum tension of adhesion so that the sliding does not take place in the perimeter points of the rotor and the rollers of the axes of the pulleys. The straps that allow great tensions are made of flexible and resistant material, Kevlar type, similar to the crane slings, etc. and even with metal chains **(see** **figures 1** **and** **3****).**

7) The power **receiving devices,** of the motor peers, are constituted by **electric generators,** compressors, hydraulic pumps, thermal agitators, mechanical devices, and in particular with the use as a **transmitter and transformer of water vapor**, by multi-disk **converters, friction,** more generally for all domestic and industrial use, recharging of steady and mobile accumulators, etc. and connection to networks **(see** **figures 3****, 7).** The energy **conversion** of mechanical **work** in **heat** is obtained in the **receiving devices** as multiple friction **energy converters,** necessary and sufficient to achieve energy autonomy through the **accumulator, (22)** as an energy source with thermal storage **(TE and 22),** using as a fluid converter, transmitter and transformer the water vapor at low pressures and high temperatures, or high pressures and temperatures with the use of an indoor **coil, (Sav)** in a closed circuit, especially for **global distribution,** with steam ducts of pressurized water **(see** **figures 12A and 12B****).**

The **multi-disc friction converter** works by the friction of two sliding series of discs, interspersed two by two. An outer series runs along the drum of the outer chamber and the other from inside the axis of rotation, so the **water vapor will** pass through the free spaces between each pair of opposed discs, capturing the heat of friction between said discs.

The **heated water vapor** is used **directly** or transferred to the thermal material of the **accumulator,** for its extraction and distribution with endothermic turbine by "demand". **8)** As for the **accumulator on land,** the corresponding infrastructure consists of an **undercut** and waterproofed **enclosure, (see** **figure 1****),** and in the sea by a **floating platform, (see** **figure, 2** **and** **3****)** so both interiors provide **economic and abundant thermal material** in the nature, of **great specific heat**, among which the **ceramic** material stands out with adequate technical characteristics, for its **heat capacity** and high temperature support, which allows the use **of water vapor** at high temperatures, both for the accumulation as for the subsequent extraction, by **"demand", (see** **figures 12A and 12B****)**.

**9)** The **transformation of heat** into **mechanical work,** in closed circuits **of water vapor** is carried out by the **endothermic turbines, (see** **figures 12A and 12B****),** "by absorption of heat", in the phases of expansion, transforming into mechanical energy. In a **first arrangement,** the hot water vapor is extracted from the accumulator by through **double** of **spiral radial development elements,** serially, and **common axis,** in such arrangement that in **one** only rotation **one** works to **contraction** of the **water vapor** and the other one, in reverse, in **expansion,** in other words, the **two** necessary functions needed so in a rapid rotation, the water vapor, **reheated** in a closed circuit through the accumulator, enters into **contraction in the first one** preserving the temperature and increasing the pressure, when passing, through the **common axis,** to **the second, it expands,** yielding energy in heat and **pressure,** which **transforms** into tangential pressure repeated in a closed circuit with the thermal accumulator **(see** **figures 12****,** **13****,** **14** **and** **16****).-**

The **transformation of mechanical work** into **heat** is a normal operation in all dynamic activity, in most cases by impact, friction or agitation, as well as **the inverse transformation of heat into mechanical work** is **problematic.** However, this form of **heat transformation** into **mechanical work** is viable using **water** vapor as an intervening element, as deduced in Thermodynamics-

In a **second arrangement,** with the use of the pressure **"serpentine" (Sva)** inside the accumulator in the **first spiral** in **series,** in a **reverse** rotation the expansion and transfer of heat and pressure occurs an **expansion** and in the **second** a **contraction.** The **first generates** energy and the **second absorbs** less energy, the **difference being** the **net efficiency** of the turbine, **equivalent to the heat that the power source,** in this **case the coil** "of the accumulator, will provide in a closed circuit.

This provision is applied in all the terminals of the distribution networks, for mechanical use by **"demand"** or mobile **recharges.**

These processes of **thermal transformation** into **dynamics,** by **logical extension,** can be adopted **individually** in any other energy process **"whose source of energy"** is **thermal combustion, nuclear, etc.,** in any of its forms, with the particularity that in order to be applied to the wind is necessary the **conversion** of the **mechanical torque** of the rotor in thermal with the converter, followed by a reset of the **inverse of thermal** in **mechanical** as it is widely exposed.

In any process, with the intervention of **water vapor,** any physical application is possible.

In cases of **emergency, repair or replacement** in high-power facilities such as extreme offshore wind, it is usually resorted to the fastest and most compact source of energy, as the nuclear power that can take part in the process is the same, with the ease of the **reactor** being able to be a part of the outside of the enclosure **(Ce).**

The tubes of the structure (C2) themselves, serve as simple nuclei with pellet combustible rods, of **minimal reactivity,** so that if they are very thin and **alternate** with **neutral elements,** with a **simple vertical translation** of the assembly, (equivalent to the small lengths of pellets), **activates, slows or shuts** down the system.

It is a **combustible bar** divided or sectioned **(41a),** so that with the transfer of the length of a pellet is carried out the transfer of all the components of a bar, that is the one of each and every bar, which supposes the 50% reduction in the length of the reactor housing and with a simpler maneuver, the current reactors could be replaced, and in project, by these of low reactivity. The use of this **waste** would be cheaper than its **confinement** and control.

The contribution of waste properly handled in small proportions is very profitable since the normal performance of a conventional plant is not higher than the **85%.** It's deducted that the proposed endothermic turbines can be supplied with a minimum fuel cost. This modality allows the construction of very compact endothermic turbines so that they can be applied to any type of energy source, steady or mobile, terrestrial or marine, underground or submarine, nautical or aeronautical, etc. All that needs to be done is applying the proposed global application mechanisms.

These sets of **minimum size** can replace and renew, in short term, the current mobile parks of all kinds, both, terrestrial, nautical and aeronautical, including submarines, of an **unpredictable future.**

Given the small weight of the nuclear **combustible** and the high temperatures that can be reached, and eliminating the central core, a single chamber would be obtained with **the combustible elements** and **water vapor** generated by the injection of liquid water at one end of the inner core and exit from the water vapor at thousands of kg/cm² on the other we would get a turbo-jet of **water vapor** instead of ordinary fuel gases.

If an output velocity of water vapor equivalent to the one of the gases is obtained, similar thrust and power would be obtained.

While wind energy is a fundamental component of the autonomous energy unit, we cannot avoid referring to other similar energy sources such as thermal energy, fossil combustibles, nuclear fission, etc. In cases of **emergency, repair or replacement in** large power facilities such as offshore wind farms, the fastest and most compact source of energy, such as nuclear energy, is used. The process is the same with the facility that the **reactor** can be part of the **outside** of the enclosure simplifying the compact process **(Ce).** The pressure support tubes on the faces of the structure **(C2),** serve as simple cores with **combustible rods, pellets** of minimal **reactivity,** so that if they are very thin and alternate with neutral elements with a s**imple vertical translation** of the set, (equivalent to the small lengths of the pellets), **activates, slows or shuts down** the system. It is a fuel bar divided or sectioned (41a), so with the transfer of the length of a pellet is also carried out the transfer of all the components of a bar, that is, all of each and every bar, which supposes the 50% off the length of the reactor's shell and also a simpler maneuver.

Modules of several MW and even larger can be obtained, to the extent that they could replace the current reactors, and in project, for these of low reactivity, exclusively supplying those currently considered as **radioactive waste.**

The use of this waste would be cheaper than its confinement and control.

The cost of installing and generating power from such a nuclear source is irrelevant. The risks are minimal and the installation costs of all components are equally minimal. It only remains to apply the suggested mechanisms of global application.

These mechanisms of minimum size can replace and renew, in short term, the current mobile parks of all kinds, both, terrestrial, nautical and aeronautical, including submarines, of an unpredictable future.

Given the small weight of the nuclear fuel and the high temperatures that can be reached, in the central core would be a single chamber with the fuel elements and water vapor generated by the injection of liquid water at one end of the core and steam outlet of water at hundreds, or thousands of kg / cm² at the other end, getting a turbo-jet of water vapor instead of ordinary combustion gases.

If an output velocity of water vapor equivalent to the reactors gases is achieved, more powerful units than the current large ones could be obtained.

The problem is posed and the results will be obtained with the authorization of the applicable tests.

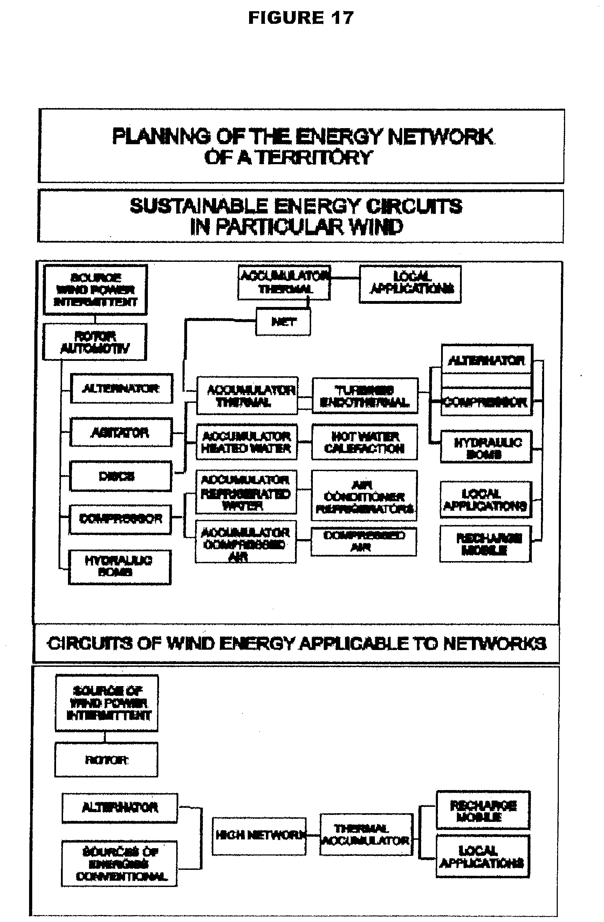

**Figure 17** shows a picture that reflects the possibilities of generating and distributing the use of water vapor as a transformer and distributor element within the broader field of applied energy, whatever its origin and destination is.

**10)** The low cost of energy of the **Marine Wind Unit** allows obtaining **hydrogen** by **hydrolysis** of **seawater,** being applicable **in mobiles,** especially in **air navigation,** increasing the power and decreasing the weight and load, and by extension in all modes of mobility.

**11)** Once the most favorable configuration of a determined speed V has been obtained, it is applicable to any size and power, in **atmospheric medium,** according to the principle that establishes the compliance with the laws of similarity of Newton, Hooke, Cauchy and Mach. This means that the configuration of a **100 kW** model is similar to model of **10,000 kW** or more.

It should be added that the ***speed*** of rotation of the **tractor axles** depends on the peripheral speed of the turbine frame and the **diameter** of the drive pulleys that can be selected to match those required by the **power receiving devices,** however high they are, avoids the **"obsolete" multiplier** of conventional wind turbines. **12)** The **autonomous energy unit,** as a **objet patentable** consists of a set of **components** that are necessary, each and every one, from the capture of wind energy to its use, to be available for any service, particular or collective, in all its forms with full independence, available to any user at any time and place.

In particular, the assembly and its components comply with the necessary and sufficient conditions to constitute a **source of energy** from the **wind kinetics** that is strictly **renewable and autonomous,** from its **generation** to any **use** and **circumstance.**

The accessibility is guaranteed, because all the models of a place are of similar configuration and according to "fluid mechanics", with the scale modification, large size and power can be reached.

They can be installed both **on land** and at **sea** as shown in the similar land and "offshore" plans, which together with the floating tank arrangement can be installed in sufficiently deep water, to the point that they facilitate the installation of energy receptor devices at the same time as **membrane elements** for desalination by **reverse osmosis,** and by direct pumping or **"reverse circulation"** system obtaining potable water for **land** use, aquifer recharge and forest fire protection.

All the components can be built with commercial and common materials, such as those used in construction and industry in general.

Thus, **first,** the **sector** and the **state** of **the art** are exposed and **then the explanation** of the theoretical and technical foundations of the object of the solicited patent.

### B) Sector of the technique.

The sector of the technique is the production of energy for any activity, where the **kWh** is an irreplaceable universal economic reference, with a demand in constant growth.

In addition to the basic sectors of electricity and thermal consumption there are other necessities, such as obtaining potable water and environmental protection, which depend on the availability of the previous ones.

The technical sector in the energy field of thermal, wind and thermo-solar origin is very broad, with unsatisfactory results in most cases, such as fossil fuel, coal, thermo-solar and photovoltaic power plants and others like the mobile traction of all kinds of vehicles, etc.

Given this situation, it is a priority to use the most appropriate type of energy, such as consolidated wind energy, within renewable energies, provided that in the execution availability and acceptable performance are obtained.

Consequently, the priority sector, due to its exceptional importance, without limitation, is the production of **energy in general,** for industrial and domestic use, especially electric, thermal and mechanical and in particular the air conditioning, desalination, hot water and any other use compatible with the above.

Thus, the **sector of the technique** corresponds to the production of **wind energy** transformable in any other of the ordinary use, as well as the **reconversion and improvement,** of the current thermals relative to conventional nuclear reactors, ignition of fossil fuels, coal, etc., and its proper application to appliances of ordinary use.

### C) State of the art.

Special reference is made to current affected procedures that are based on thermal boilers by coal combustion, hydrocarbons, nuclear energy, in steady or mobile installations, as well as wind turbines that comprise conventional procedures, whose costs have a significant influence on the global economy.

The state of the art that interests is the cited procedure and any other that can be innovated obtaining acceptable advantages over all existing ones.

It is admitted that some of the current **techniques** are **valid** but that the processes are perfectible with the **proposed** procedures, being objects of quality guarantee and reduction of the encumbrance of all types of energy.

In wind turbines, **conventional** models have low yields and limited **power** and structural and mechanical development can be **improved.**

It is only recently when the advance of fluid mechanics knowledge has driven to a greater extent the development **of devices** for capturing kinetic energy of air and combustion gases, which are in continuous evolution and whose foundations have a direct relationship with the exposed alternative. However, at the present time most of the conventional processes have not evolved sufficiently, and they can be considered upgradable although they are maintained by the great influence and inertia of the established industry, so these processes should urgently be the subject of research and development.

In some cases, and at this time, it is not only about eliminating conventional processes but also about enhancing, improving and complementing them, without prejudice of being absolutely replaced over time by these new proposals, such as thermal power plants, which consume expensive fuels, limited in time and emitting noxious gases. As it is clear in the present report, all current energy and mechanical processes can be virtually improved, an issue in which we are involved.

At the present time there is an **accelerated** wind energy movement that can lead to an **"energy bubble"** in the way of what happened with profitable investments that have ceased their exercise for an excessive cost and an "obsolete" technology since its inception, because it hardly evolves and lacks the innovation seen in other technologies.

### D) Explanation.

The fundamental purpose of this patent application is **the design** of a new generation of autonomous global **wind energy** with capture, infrastructure, transmission, conversion, accumulation, transformation, distribution and application, in the most efficient and satisfactory way because it is inevitably necessary.

It deals with the exposure of an innovative basic, natural, renewable and sustainable energy, such as wind kinetics, whose **specific technical characteristics differentiates** it, in anticipation of the **development** and the **angle** of incidence of the different possible blades, depending on the rotor surfaces (swept area and area of influence), the nominal wind speed and the coefficient (k) of technical configuration and rotor efficiency **(see** **figures 1****,** **2** **and** **3****).**

The **second** are the options of **"slow"** and **"fast"** turbines based on the greater or lesser number of blades and **proportionality,** that is, **proportion** or **relation** between the total exposed surface of the blades and the **area of influence.**

The third is the **low** turbine alternative that drastically reduces tipping efforts and facilitates the execution, assembly, handling, maintenance and accessibility of the multiple components on a platform close to ground level and water surface, and consequently costs of infrastructure, **(see** **figures 1****,** **2****,** **3****).** The structural configuration of the braced support presents a greater resistance, by light and edge, in all directions and the overturning by thrust of the wind on the rotor axis, especially in the water, **(see** **figures 3** **and** **6****).**

The **fourth** is the use of a totally **radial** and **reticular** rotor, by trusses of hollow square bars and large embedding edge, as a support and transmitter of the thrusts of each blade and the set of all of them to the central axis, at the same time transmitter from the kinetic torque to the motor axes, at the convenient direct speed of the receiving devices of the mechanical energy by means **of pulleys, transmission belt** and **perimeter knots** of trusses, **(see** **figures 1****,** **3** **and** **5****).**

The **fifth** is the possibility of using the foundation at the same time, given its mass and volume of ordinary materials, as a foundation and thermal energy accumulator, **(see** **figures 1****,** **6****,** **7****,** **8** **and** **10****).**

And the **sixth** is referring to the type of material of the different components, which are ordinary and commonly used in construction and industry. With regard to the structural elements, these are normal commercial profiles, preferably square hollow section, used in metal constructions, stainless steel, galvanized and ordinary with environmental protection, and other materials of current use in construction, such as cements, aggregates, ceramics, conduits, belts, insulators, etc.

Regarding the transmission mechanisms, monitoring, energy receivers, and other components, these are in the industrial market.

According to the above characteristics, the **advantages** offered in comparison to current techniques are the following:

### E) Advantages with regard to conventional wind turbines.

**Technical advantages:** wind turbine with a structure of reticular radial trusses with self-regulating blades and direct linear transmission of traction with the multiplication required in the receiver mechanisms. Apart from the simplicity and efficiency of the system all samples are similar so the power depends on the scale. The conventional three-bladed "wing-type aircraft" models, in cantilever, whose blade **width** is wrongly **inverse** to the **swept area,** are presented as the best possible solution, and have not evolved since their origins in the last century, which also occurs with the mechanisms of multiplication and transmission.

**Structural advantages:** the structural forces that can be supported by a rotor are proportional to the **canton/light** coefficient of the trusses in the corbel, resulting in that said coefficient in the lattices if of the order of **5** times greater than the rotary embedded in the "bushings of the three shovels "with great disproportions for the function that they have to develop. Likewise, the cable-stayed support is more functional with one-way rollover moment when replacing the rotation of the "gondola", unnecessary, at the apex, to a self-sufficient foundation, as it is an energy accumulator with a large thermal capacity.

**Mechanical advantages:** simplification of any mechanism, such as the replacement of a gigantic **multiplier** by a simple direct **transmission belt.**

**Physical advantages: conversion, accumulation, extraction, transformation, distribution and autonomy,** of a dynamic energy source in the most compact and efficient way for distribution through **networks,** in **closed circuit,** of **steam water under pressure.**

**Environmental advantages: total** contribution to mitigate the effects of **"climate change"** and **"global poverty".**

Total **accessibility** and **well-being** greater **global.**

**Working advantages:** Creation of a high performance type of work to satisfy, without dependencies of third parties, the majority of the own and solidary needs.

**Design advantages:** by limiting the action of any wind in a tangential direction by the action of the calibrated spring, the calculation is limited to nominal and maximum forces and power, corresponding to the **"possible"** nominal wind speed **selected** in each place, resulting in the design of the best prototype as a model of **any power. Economic advantages:** the costs from the **generation** to **distribution** to the consumer are around a **40%** of the **current** wind turbines.

### Background.

The terrestrial atmosphere to a large receiving chamber, the thermal energy poured by the Sun on Earth, as well as all the energy **devices** and processes of the Globe.

This amount would deduct the energy radiated to the sidereal space and absorbed by the different liquid and solid masses, the conversion into vapor or liquid, respectively, that make up both the Earth's crust and the sea, to which would get added the swell, marine currents, degradation and transport of soil and rocks, photosynthesis of plants and many others.

It is commonly admitted that the wind energy is thousands of times higher than the energy of the world consumption, therefore in addition to renewable and clean, it is the most sustainable.

The inverse process of converting **kinetic energy** into **calorific or practical mechanical** will be the most natural and direct and of the highest performance and presumably the most sustainable and economical.

The energy of the atmosphere is everywhere and has enough potential to be able to consider it as the most direct and efficient source to have energy, anywhere in space, without consumption of consumable fuels. Only the collection and transmission mechanisms are required as it is intended and explained in the present patent application, adding the possibility of intermittent accumulation and extraction for continued use, according to the user's **needs** at **each moment** and in its surroundings. The mathematical calculation of the windmill is not object of vindication, but applying the principles of action and reaction and the amount of movement, in an "elastic interception" between a body at rest and another in movement, the **capture and exchange of energy** is half of the **original.**

Thus, the available energy will be of the order of half the kinetic energy of a wind flow corresponding to the **surface affected** by the turbine, making it possible to approach said value with a suitable configuration such as the one exposed. It should not be forgotten that due to the effect of radial **expansion** and **dispersion radial of pressures,** (bulb of pressures), the surface of retention, or **affected** is superior to the one known as "surface swept" by the blades of the turbine, for which it will be necessary to take into account the concept of **affected** although its calculation is not known or claimed. However, in reference to the calculation of the effect of wind in structures in "latticework" values of the order of 1.5 are applied with regard to the area of the blades.

### Descriptive memory

Accordingly, a description of the process and the attached figures is prepared below to facilitate its better **understanding, consisting of the following sections:**
**a) Configuration of the wind turbine in relation to the current technique**
**b) Determination of the fundamental components of the unit**
**c) Support braced structure.**
**d) The foundation and the accumulator**

Thus, a succinct reference to these parts is set forth as follows:

### a) Configuration of the wind turbine according to the current technique

**1). The angle of incidence** of the blades with the plane of the rotor when rotating on a damped and controlled eccentric axis varies between an arbitrary **minimum,** determined by a *fixed stop* that limits the inclination, and a maximum, corresponding to the maximum torque of the thrust of the wind, deduced the **reaction of the spring.** With intermediate values, the thrust would be proportional to the square of the wind speed and inversely proportional to the square of the cosine of the angle of the blades, that is to say to the affected surface, resulting in the torsion moment and the spring pressure **becoming even,** but in a value corresponding to the deformation reaction of the spring that has been fixed as a **constant,** resulting in a constant power, which will be called **nominal power,** whatever the wind speed, and also the efforts in the trusses and the rollover moment of the support or tower of the wind turbine, **(see** **figures 1****,** **2****,** **3****).**
**2).** Regarding the **rotation speeds** of the **rotor,** independent of the size, in a first estimation, for the **top speed (Vy),** perimeter values are adopted between **30 and 40 m/s** in regime of "pressure of simple retention" of the wind in the slow "turbines" and between **60 and 80 m/s** in regime of "lift by impact ", (similar to a" water hammer "), in the "fast" turbines. All this has an explanation based on the Reynolds number, over the different behavior of the bodies to the flow of fluids, whose theory is usually applied in hydraulics and aeronautics.
   The required revolutions can be estimated because they are controlled with the pressure of the compression springs between the two series of discs of the dynamic energy converter in thermal mode, as "brakes".
**3)** It has been stated that there must be a certain **"cadence"** of cut, that is, certain impulses and a certain interval of time between them, which relate the energy captured and the recovery time of the **"nominal speed"** that is defined as **V1 to 10 m** in height, to which the coefficient of **height of the axis,** relative to the roughness of the soil of the place, will be applied to obtain V, as the average value for all the turbines.
**4).** The lower the nominal speed is chosen, the greater the number of hours per year at nominal performance and the higher the annual production is, but on the other hand the lower the nominal speed, the greater the diameter and the costs are. The choice of one value or another gives us a cost per **kWh** produced, which ultimately will be the adopted one after analyzing the prevailing wind curve and integrate the powers that are generated, considering the maximum value of the nominal selected.
   To obtain the performance of a turbine dimensioned by virtue of a "wind frequency" curve, it suffices to apply the formula of the reference power **W=kR²V³,** and integrate or add it up partially.
**5).** A favorable factor is that a well-configured and dimensioned turbine can maintain its nominal speed for speeds other than wind, as well as a different speed for the same nominal wind speed. The explanation is very simple: for the same speed V of the wind, if the speed of rotation increases, the "cutting" speed increases with the corresponding increase in pressure and, in the opposite case, if the speed of rotation is reduced, the **"cut"** speed decreases of with the corresponding reduction of the pressure, and since the power is the product of both the results, the difference is marked by the surface of the blades. However, if the pressure increases, the surface of the blades decreases but the section increases and if the pressure decreases the surface increases and the section decreases. The product of both values, determine the efforts to be supported resulting similar in both cases. The basics have been laid to determine the design and operating regime of the turbine to obtain the best possible result.
**6)** The stability of the turbine and its support does not present structural problems with the increase in size, which do happen with the conventional blades that work in corbel with great moments of strength at start. To alleviate this problem, they reduce the width in tip, where it should be the largest with the largest surface swept. Technically is not correct, however, it has a solution with the proposal of the present application.
**7).** The diameter of the turbine has virtually no limit because the structural arrangement of the big "amusement Ferris wheels parks", covered sports stadiums, hangars and others, is perfectly achievable, and can reach diameters greater than 200 m as shown by the experiences of Vienna, London, Singapore, etc., simply higher than those required for mills cited, 10,000 kW and older. And also you can see the perfect behavior of the proposed *blades* such as the **sails** of large sailboats. They are monumental works but perfectly realizable and with costs proportional to their power. In any type and model there is a question that is what they usually comply with and that's the speed in **"tip"** of all the sizes of a certain model is uniform, **(see** **figures 1****,** **2** **and** **3****).**
**8).** For the purposes of structural determination of the other components of the turbine such as transmission and support, first the linear pull on the belts is equivalent to **Ty (kg) = 100 W (kgm/sec)/V(m/sec),** where **W** is the nominal power and **V** the peripheral speed at the traction points of the frame and secondly the nominal thrust on the plane of the turbine reaches the value of the expression **Px (kg) = kx.R2 V2,** where **kx** is a coefficient that depends on the configuration of the turbine and the characteristics of the fluid (angle of incidence, density, elasticity, etc.), **R (m)** is the radius of the turbine and **V (m/sec**) the speed adopted as nominal wind at the height of the rotor axis.
**9).** The **receiver devices** of the pair motor torque generally have a high speed of rotation relative to the rotor of the wind turbine, being in the electric ones of **20 to 50,** or more, times greater than if it is transmitted directly from the rotor shaft. It is necessary to interpose a multiplier of large dimensions, with lower revolutions in the rotor and higher torque in the "hub". However, in this alternative in which the traction is located at points in the outer surface of the rotor, the speeds of rotation of the tractor cylinders have high values, which do not require a multiplier **and** rigidity of the rotor shaft and the tractor axles.
**10).** The devices receiving the motor torque generally have a high speed rotation rate in relation to that of the rotor of the wind turbine, being in electrical from **20 to 50,** or more times greater, that if transmitted directly from the axis of the rotor is necessary to interpose a multiplier of great dimensions, with lower revolutions in the rotor and greater torque in the "hub". However, in this alternative in which the traction is located at points on the outer surface of the rotor, the speeds of rotation of the tractors cylinders have high value, which does not require a multiplier and rigidity of the rotor shaft and the tractor axle.

The coefficient of multiplication of the speed of rotation of the rotor and the tractor axles is the quotient between the diameters of the points of traction and those of the pulleys. In a wide field, from **100 to 20,000 kW,** and higher, (whose limit is the structural of the rotor), you can easily obtain speeds of 25 to **100 rps,** which fits perfectly in the wide range of disk converters, alternators, thermal agitators and other small, medium and large or very large appliances **(see** **Figures 3** **and** **6****).**

### b) Determination of the fundamental components of the unit

### 1). Dimensioning of the blades and the rotor of radial reticular trusses

The calculation of the blades one of a normal structure within the field of resistance of materials and the parameters are obtained from the equilibrium of the forces that act on them.

The rotor sections are straight and are calculated with simple compression and tension, as a normal reticular truss, but the compression sections have to be checked so the buckling load is less than the admissible one.

As for the drag by friction of the belts, as conveyor belts on knots of the perimeter of the polygonal frames is not inferior to those of the alternative of circular frames because it is due to punctual pressures on the vertices of the trusses, **(see** **figure 1****),** and the tension difference of the input and output belts of the pulleys, to prevent slipping, a tensioning roller is provided, **(see** **figure 7****).**

Finally, for the possible "pitch" or "rolling", lower lateral stabilizing rollers are provided, which at the same time **serve** as a **brake booster for emergency stops.**

### 2). Torque transmission system

The alternative of transferring the transverse reaction of the blades to the reticular rotor is adopted, which can be converted into a high-speed drag track and which transmits a fast torque to the smaller axes of the **receiving apparatuses.**

In this way, there are motor pairs that allow have the number and diameter required by the elements of different practical application, such as electrical, hydraulic, pneumatic and converters of the dynamic energy in thermal **by steam,** etc. **(see** **figures 1****,** **2****,** **3****,** **7****).**

### -c) Support braced structure.

It consists of a support of transverse pillars and braces, legs in the direction of the wind, installed on a rotating platform, by means of a pivot inside a cylinder embedded in the foundation with a firm base or by means of a self-adjusting floating platform in the sea, resulting in a **"low"** turbine alternative with reduced rotor height and lower average wind speed. However, in order to have the same **power** with a **lower speed,** the **radius** of the **rotor** increases, whose influence is compensated with the reduction of the **tipping moment** of the support in **M,** apart from the fact that all the components are accessible at ground level and the water, both for assembly and handling and maintenance, **(see** **figures 1****,** **2****,** **3****,** **6** **and** **7****).**

### d) The foundation and the accumulator

The **foundation** that has to support the own weight and the moment corresponding to the normal thrust, **(Px),** of the wind, on the plane of the rotor, by the height of the axis in all the directions, is needed a structure that, by mass and volume can be used at the same time as a thermal energy **accumulator,** fed directly by the **energy converters** of the receiving devices, by means of water vapor, at medium pressure and high temperature, in closed circuit **(see** **figures 11****,** **12** **and** **13****).** However, with the inclusion of a conventional **"coil"** in the interior of the accumulator can be extracted **steam heated** at high pressures.

The **kinetic energy** of the wind captured by the blades of the turbine has been converted directly into thermal **energy** of **direct or cumulative practical application,** thermal, pneumatic, hydraulic, mechanical, potential, etc.

With the accumulation in the foundation, the double use of the foundation has a practical wind slope, because the wind is **intermittent and** instead its energy can be accumulated, extracted and used in a **continuous** way of the required characteristics at each moment.

### Description of the drawings or figures.

For a better understanding of the figures and definition of the relationship that exists between them, first a description of the figure of a component and its function and relationship with the rest of the components is made and then, in detail, all the parts and their function and relation with the rest of pieces of any component of the set. The former is defined as numbered figures and the latter with the figure or letter with which they participate in any figure.

In both cases the nature of the component or piece is described more extensively than in the mention that has been made in the description and the previous explanations of the report.

**First,** the **description** of the content of each figure is made, as follows:
**Figure 1** shows a **front view** of a prototype of the wind turbine, horizontal axis, rotor with reticular structure, based on conventional transverse radial trusses (4), with blades that are articulated on the axes of the outer sections of each truss, with unequal lateral widths (I and II), so they can rotate depending on the different wind pressures under the control of a rotation spring or similar (21) to limit the normal and tangential pressures on the faces of the blades (1), the transversal trusses (4), the shaft (1-1), and finally the pillars (5), and tie rods (6), and maintain a nominal power predetermined by the rotation and pressure of the converter discs (32).).

The trusses are made up of the transverse and frontal bracing bars, (3, 4 and 18), transmission belt (7), rotating platform (9 and 10), conversion train with tension pulley and traction sheaves with common axes with the receiving mechanisms (8), and finally we have in the foundation the rotating pivot (11 and 12) and the enclosure of the foundation and the thermal accumulator (22).

As for the support in the form of vertical pillars and transverse braces, on a rotating platform by means of a base on a **lower cylinder** that **pivots** inside a cylindrical tube located firmly on the firm foundation, with double use of the foundation and as a thermal energy **accumulator,** when the site is on the ground. If it is a marine unit, it is installed on the **floating platform.**

The transmission is direct by means of traction, by means of belt drive, (7), in a conventional way, on polygonal points of the trusses, on an external face of the lattice frame and drive pulleys, (13), as axes, (14), of the receiving **devices,** (15).

**Figure 2** shows the same *frontal view* of a **marine wind unit** with characteristics similar to the previous one but in the **sea,** instead of on **land,** with the difference that in this second representation the blades have been split into two similar ones, located in the same truss in line and in stretches of alternate stiles for the reasons expressed in the report, enjoying both alternatives of similar efficiency, with the difference that being two smaller pieces are easier to build, handle, transport, install, maintain, repair, replace and reduce the risks.

The set of foundation and accumulator to be floating are anchored (24) on the seabed (23), and can raise them for transfers and sites as large ships. In this case it is worth mentioning the use of the scrapping of the single-hulled tankers.

The result is that this figure differs from the previous one in the fact that it is located on land and this one in the sea or similar liquid medium, to which is added the bracing system of the pillars and braces (6 and 26).

At the same time, a cylindrical or similar floating structure is provided, which at the same time serves as accumulator (22) and of support and free orientation, which is made in the same of the wind, by means of the anchor rods (24), corresponding to the setting of the surroundings and fixed to a single point of the anchoring foundation (23) located on the surface of the bottom, and on the platform is located the thermal material that by high temperature has a large capacity, capable of storing the production of hours in anticipation of stops for various reasons, mainly due to low or zero wind for several days, all with a lower density than hydrostatics so that a minimum flotation is obtained, a space will be available for the tensioning equipment (25) and other specific naval facilities.

**Figure 3** shows a **side view** of the alternative of the previous figure, of "low" turbine with braced support, on a rotating platform, supported and adjustable by floating platform, pivoting on foundation, with various uses such as foundation, accumulator and cistern for distribution and sites for generation and desalination if it is the case.

The elements that appear are the same as in the previous figure, except for the transversal brace of the trusses (18c and 18t), and the frontal brace (4c and 4t), where the compression-working bars (c) are differentiated from the ones that work with traction (t), greater than the previous ones, because the compression overload is limited by the buckling loads depending on the square of the length, which in the case of tension overload of normal materials, such as steel, lacks buckling.

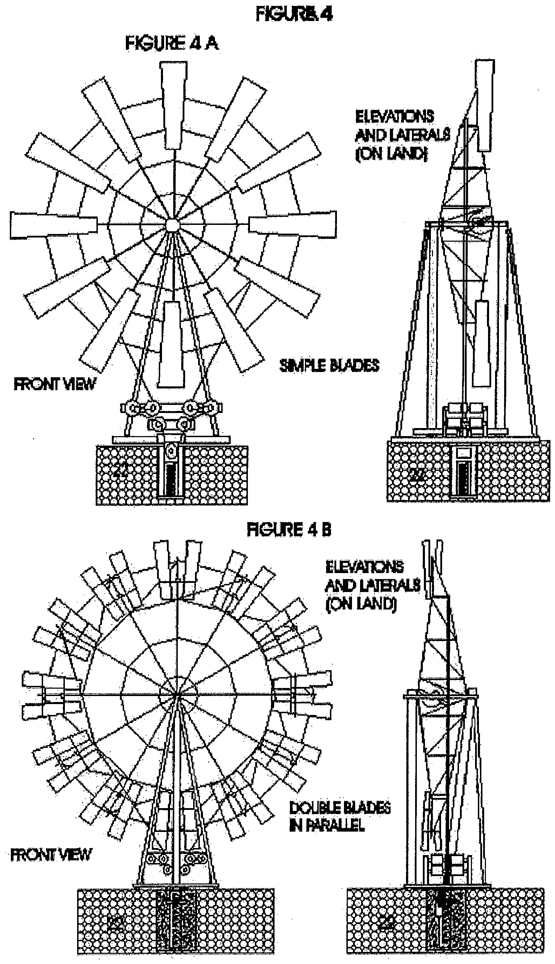

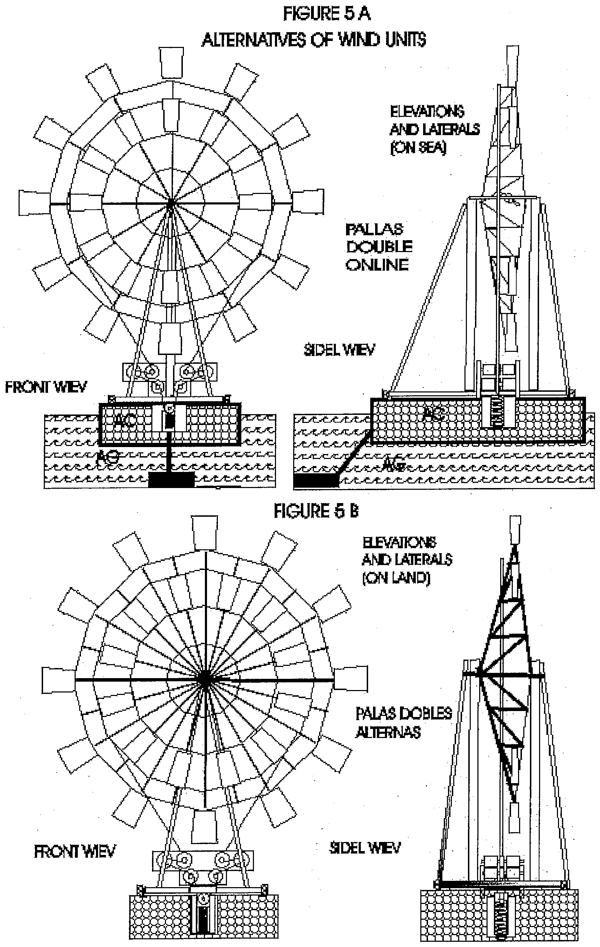

In **figures 4A and 4B** we find simply represented elevation and side of alternatives solidary with the variants of a single blade and its parallel splitting into two smaller with the supposed advantages similar to those shown in **figures 2** **and** **3****,** with the difference that this it is supposed to be located on land and the previous one on the sea. In **figures 5A and 5B** are simply shown elevation and side of alternatives that are supportive with the aforementioned splitting of two pieces in alternating linear sections at the end of a same truss, with the difference regarding the figures 4 in which a variant of unfolding of blades and trusses, is, let's say, a truss for each piece, unfolded in line instead of parallel to the previous case. The difference of advantages in regard to the unfolding of the previous variants is the duplication of trusses with two types of blades, which would ultimately result in a double number of both types. Perhaps with very large sizes of the order of MW it is advantageous to reduce the effort and magnitude of all the bars.

In short, this type of advantages will have to be valued by the designer and the builder.

**Figure 6** represents the most normal plant of a **wind unit in the sea,** where we'll see their special braces of more edge, the tie rods with their own anchorages as in ships and container cargo ships, or the **barges** type as less equipped elements but useful for the case of being used as simple tanks for the distribution of thermal material or desalinated water. A similar case is the full use of single-hull oil tankers that will be retired to an expensive scrapping when they are in full use for services such as the proposed platforms and with the infinite advantages that can be recovered.

When dealing with models of the order of large size, (MW of power), linear double blades are available, but in the case of very large ones it is advisable to go to the alternative of Figure 5B, adaptable to ground and sea.

In **figure 7** the **conversion train** mentioned above is represented with more details, with the same configuration for land and sea.

All the elements that compose it appear highlighting the diameters that allow a high multiplication of the rotation of it regarding the rotor, which can vary from 1 to 20 in small models to over 200 in the very large ones.

The system of rotation of the platform on running gear (16, 10 and 17) is included in greater detail, although the greatest efforts are those of the moment of embedment that supports the rotating base cylinder of the foundation (11).

In **figures 8****,** **9** **and** **10** are show, the exploded view of a first single blade and a second double blade, both consisting of two parts of different width (1) and its axis of the rotating joint (2), in the last section of each truss, whose angle at each moment will vary depending on the difference of thrusts of the wind, on both sides (P1 and P2), and of the pressure (R) exerted by the deformation of the spring (21) on the difference of the set of the two major parts.

The blade in a cross section (AA), in figure 10, the two sides are distinguished unequal regarding the axis of fixation, (I <II) (with greater width of the second), the axis of rotation and orientation (2), the initial nominal angle stop (21a) and a generic torsion spring model (21), which can also be a leaf spring or leaf, etc., and better if it is fitted with a hydraulic shock absorber.

The tension of the spring, in its initial situation, will depend on the difference of thrust on both sides at the nominal speed (V) of the wind, estimated as corresponding to the power required for the assembly of the tractors. This position will be determined by a fixed stop on the truss (21 a).

Likewise, the projection (x-x) of the blade on the shaft and the pressure spring is shown, which allows several variants depending on the stress it has to support and the fixing point. Anyway, in the market there are all kinds of springs and dampers, especially for transport, from light to heavy.

It also represents the detail of a wing type, composed of two thin sheets of resistant material, with the intercalation of a type of laterals that make up the figure of an aerodynamic profile with low resistance to air flow.

The execution of one or two blades is similar, although the two in line is lighter and more manageable. Finally, a detail of the embedding of the bars of the trusses on the rotor axis, a sort of flange on the shaft (19) and a simple union (20) is presented. **Figure 11** shows the components of the thermal converter chamber (27) that transforms the mechanical torque from the wind rotor into thermal energy as the primary source of energy.

This primary energy is generated in the axis of the motor pairs, by the wind rotor, which is transformed into heat by friction of two series of discs of anti-wear materials, special steels, stoneware, alumina, etc. a series (a-a) and (b-b), which is fixed on the cylinder of the drum (27), by means of pins (29) and another series, (cc) and (dd) which is also fixed on the axis of the torque (30) also by the means of pins, both series being separated from each other by narrow cylinders (28), some around the inside of the outer drum and others outside the inner axis, so the pressures between series is uniform and of a certain intensity by means of the calibrated pressure springs (32).

The thrust between a fixed plate (31) and a rotating series sliding on the same common inner shaft, also affects the other sliding series, not rotating, fixed to the outer drum, producing friction between them all at the same time and with the same intensity, because, as indicated, both series are sliding on their corresponding pins (29) and have between them discs of the same series, and the same distance fixed by their corresponding narrow parallel cylinders (28).

The water steam, coming from the accumulator, that **enters cooled** inside the drum by one of its lateral plates and circulates between the different series in a route on the outside followed by another through the interiors of themselves transmitting the power of the pair of motor of the axis as a result of the friction force of all the discs by the average speed, it transforms into heat the energy of the motor torque of the shaft so the water vapor **leaves hot** by the central axis, having increased its density and pressure by the two turbines of pallets at the ends (33) at the same time that forces the circulation of water vapor, in a closed circuit, to the **accumulator** where the energy generated in the form of heat captured by the refractory ceramic elements, of high specific heat, that make up their inner mass, is stored.

The next phase is the extraction of the thermal potential of the accumulator through the corresponding **steam turbines.**

In **Figures 12A and 12B****,** the thermal accumulation phases are represented by the friction multi-disc (15), driven by a motor shaft (14) of the series of the transmission system conversion train (8) moved by the belt transmission (7) and the axes of the pulleys (13), such that the water vapor heated in the energy transformer transmits its temperature to the thermal material of the enclosure of the accumulator in a closed circuit so as to maintain the temperature variations experienced by the extraction heat from steam turbines transformation or heat conversion into mechanical work of practical application.

There are two alternatives, according to the needs of the project, either for heat extraction at high pressures and temperatures using a turbine of high pressures and temperatures (TAP) in closed circuits (cc), internal and external, through the use of conventional **coils** (Sav), or for direct heat extraction, accumulated in open circuits (ca) with low pressure turbine and high or low temperatures (TAB) according to the origin of the accumulated heat, the water vapor circulating through the accumulator will always be at a high temperature (VAC) and low pressure (VAB), using the high pressure **coil** (VAP).

The alternative of the cooling of a hot room (AT) by means of an endothermic turbine (TAB) in open circuit (ca) is also represented, with extraction of a certain amount of energy corresponding to the degrees of temperature decrease between the indoor enclosure and the open. These turbines correspond to those of the following figures, 13A and B.

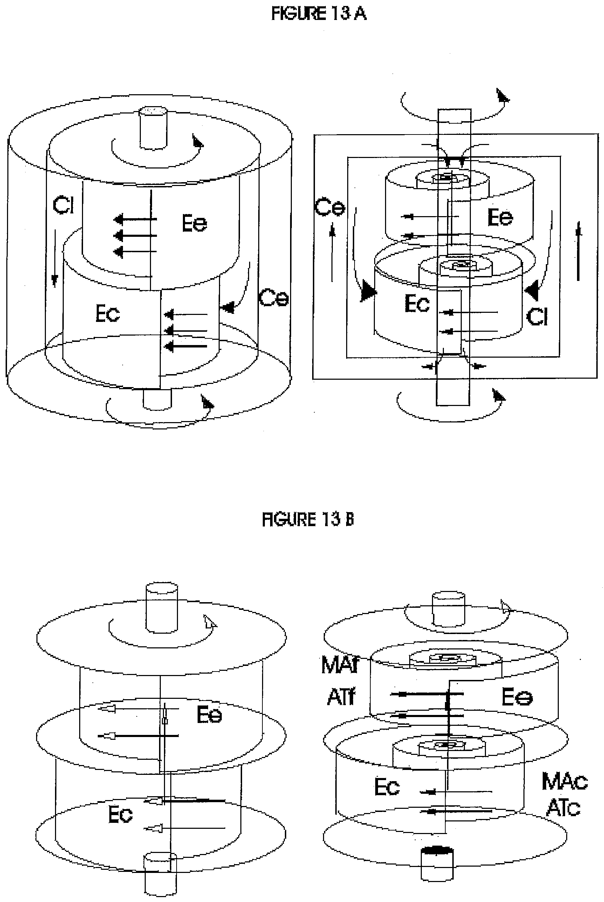

In **Figures 13** **A and 13 B,** a double endothermic turbine of high pressures and temperatures, with relative dimensions applicable to any power, is represented, firstly, above, which means that only the scale would vary.-

It consists of an outer chamber (Ce) capable of withstanding pressures and temperatures of the order of 400 ° C and 125 k / cm2. It is envisaged that inner tubes will support, at the same time, the tensile stresses of the lateral flat covers, resulting in, at the same time, lower cylinder tensions of the outer chamber.

Inside the said fixed chamber, without any movement or rotation, the rotating chamber will be housed, where the two spiral turbines (or similar) will be installed, in the opposite direction, so that the first one is the expansion of heated steam, (Ee) from the heat source or the coil of the thermal accumulator, and the second is from **contraction of the cooled water vapor** (Ec), evacuated by the common exterior of both spirals and injected in an intermediate enclosure for its high heating pressure, so that the density of water vapor is high enough, both by heat transfer capacity, and fluidity for its compression drive. This closes the entire circuit. The loss of heat in the expansion of the chamber is transformed into mechanical work of the tractor axis that determines the performance of the turbine.

Secondly **below,** a double endothermic turbine of low pressures and high and low temperatures with relative dimensions applicable to any power is represented, that is to say that only the scale would vary.

In this particular case it consists simply of two spirals as represented with internal communication through the common axis and tractor, whose idea is that the hot water **vapor** from the thermal accumulator (ATc) or the environment (Mac), shrinks in the first spiral, with small loss of heat and some energy consumption by contraction, so that in the second spiral in expansion with loss of heat and pressure, at the outlet (ATf) to the thermal accumulator or (MAf) to the environment, the pressure energy of the first and part of the temperature is recovered, so that the difference has been transformed into mechanical work in the form of the torque of the common tractor shaft, which defines the turbine performance.-

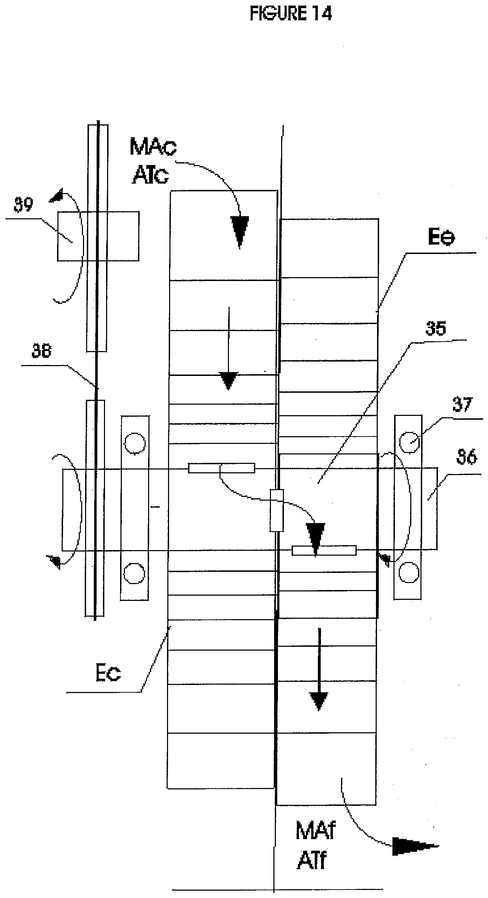

**Figure 14** shows a double endothermic turbine of low pressures and low temperatures with characteristics similar to Figure 13B of relative dimensions applicable to any power, that is to say that only the scale would vary.

In this particular case it consists simply of two inverse spirals with internal communication through the common axis and tractor, whose idea is that **water vapor** from the hot environment (Mac), shrinks in the first spiral, with small energy absorption by contraction and heating of the air.

The set of warmer air and **water vapor** passing to the common chamber of the shaft so when accessing the second spiral in expansion with loss of heat and pressure, at the exit (ATf) towards the (MAf), to the environment. In this expansion the pressure energy of the first and part of the lost temperature is recovered, to which must be added that transferred by air to the steam in the common chamber of the shaft, so the difference has been transformed into mechanical work in the form of the torque of the common tractor axle, whose difference with that absorbed by the first in contraction defines the performance of the turbine.

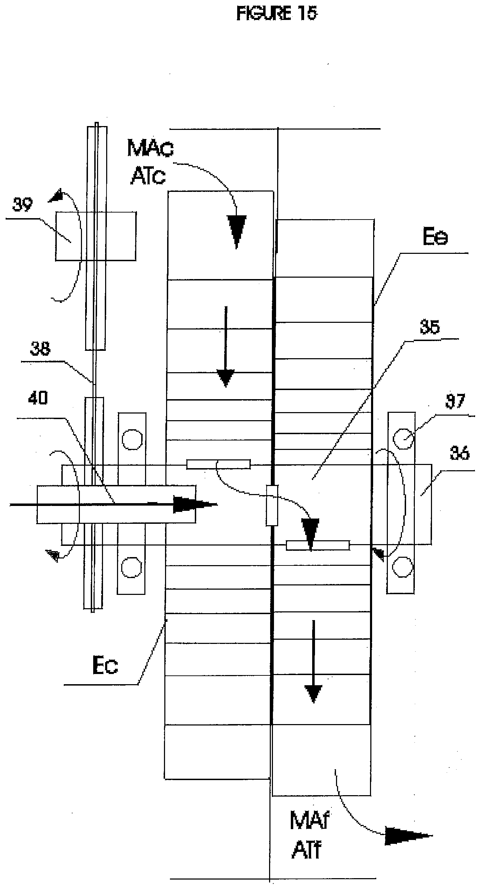

**Figure 15** shows the same previous environmental turbine, with the difference that apart from the transformations that take place in similarity with the previous figure 14, we must add the combustion potential of compressed air and conventional fuel injection, becoming an atmospheric turbo-motor without cooling.

The irradiated heat is constant and can be palliated with adequate insulation, apart from establishing a closed circuit between the outgoing gases and the incoming air so that part of this residual heat is transferred to it.

On the other hand, if the output section is increased, cooling and lower pressure are produced, so that the difference of generated and absorbed work is greater and therefore the process of the performance is higher.

This mechanism is cooler than the conventional combustion because the fuel/air ratio can be reduced, simply with higher rotation speed or with the increase in the size of the turbines.

It is a high performance endothermic turbo-motor version.

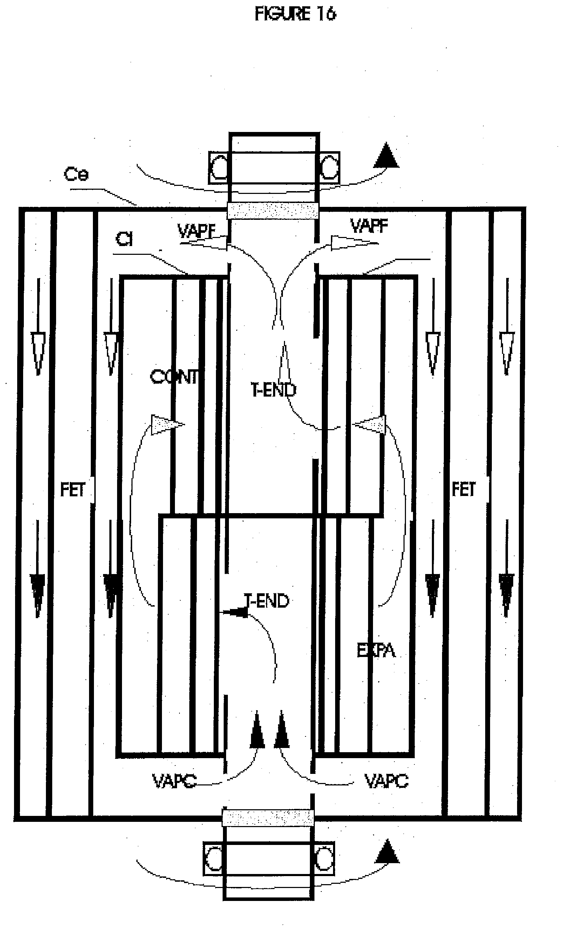

In **Figure 16** a turbine similar to the endothermic of high pressures and temperatures of figure 13A is shown, in closed circuit with the energy source of a thermal accumulator of wind origin.

While wind energy is a fundamental component of the autonomous energy unit, we cannot fail to refer to other similar energy sources such as thermal energy, fossil fuels, **nuclear fission,** etc. In cases of **emergency, repair or replacement** in large power facilities such as offshore wind farms, the fastest and most compact source of energy, such as nuclear energy, is used. The process is the same with the facility that the reactor can be part of the **outside** of the enclosure simplifying the compact process (Ce). The tubes of the structure (C2) themselves, serve as simple cores with **pellets of combustible bars** minimal reactivity, so that if they are very thin and if they **alternate** with **neutral elements** with a ***simple vertical translation*** of the assembly, (equivalent to the small lengths of pellets), activates, slows or shuts down the system. It is a **combustible bar** divided or sectioned (41a), so that with the transfer of the length of a pellet the transfer of all the components of a bar is carried out, that is the one of each and every bar, which supposes the 50% reduction in the length of the reactor housing and a simpler maneuver.

With simple housings or cameras similar to those described with power supply of the accumulator, modules of several MW and even greater can be obtained, to the extent that with a specific treatment, the current and planned reactors could be replaced by the low reactivity ones, being provided exclusively of those considered today as radioactive waste.

The use of this waste would be cheaper than its confinement and control.-

The cost of installing and generating power from such a nuclear source is irrelevant. The risks are minimal and the installation costs of all components are equally minimal. All that remains is to apply the proposed global application mechanisms.

These sets of **minimum size** can replace and renew, in short term, the current mobile parks of all kinds, both, terrestrial, nautical and aeronautical, including submarines, of an unpredictable future.-

Given the small weight of the nuclear fuel and the high temperatures that can be reached, and eliminating the central core, a single chamber would be obtained **elements** of **combustible** and water vapor generated by the injection of liquid water at one end of the inner core and exit from the core water vapor at thousands of kg/cm². On the other we would get a turbo-jet of **water vapor** instead of ordinary combustion gases.
- If an output velocity of water vapor equivalent to that of the gases is obtained, similar thrust and power would be obtained.-

The problem is posed and the results will be obtained with the authorization of the relevant tests.

**Figure 17** shows a picture that reflects the possibilities of generating and distributing the use of **water vapor** as a transformer and distributor element within the broader field of applied energy, whatever its origin and destination is.

Second, the **description** of the **parts** of any **component or figure** is made, as follows: It includes the identification number and its description, in the terminology most commonly used, with its most specific characteristics widely repeated and detailed, displayed in increasing numerical and alphabetical order.

They are described as follows:
**1-1 Rotor shaft,** with bearings in the vertex of the braced tower support, supporting the flanges (20) of each set of bars, on both sides, of all the trusses that converge in each of the two extreme flanges, ending in the set of bearings that support the normal and horizontal stresses, which converge at the vertices of both supports (5) of the brackets of the tower.

**1A- blades,** first as a fundamental and determining element of the physical process, are constituted, **(****figures 8** **and** **10****),** by self-regulating aerodynamic modules, by rotation, simple, one-piece, trapezoidal plant and section slightly domed, rotating on an axis located inside the extreme stretches of each radial reticular truss, whose axis is not located on the geometric axis of the blade, dividing it into two unequal parts, so the difference of the wind's thrust over the greater increases the angle of incidence, so that a self-regulating, cushioned spring is available on said axis, better, hydraulically, or, similarly, that its deformation compensates for the differential thrust of the wind. Both thrusts, the differential of the wind and the spring, normal to the plane of the blade, will reach a state of equilibrium because, according to fluid mechanics, in this complex state the surface, the distribution, the angle, the physical characteristics, the mechanical and wind speeds, the rotation speed of the rotor, the braking of the pulley mechanism, and an arbitrary coefficient dependent on the configuration of the lattice trusses and among others the climatology and the height of the rotor axis will have an impact.

In the process control, as equipped with a spring calibrated shock absorber, so it controls the torque of the thrust of the wind, two slopes are also observed: a) at higher wind speed, greater pressure and greater rotation of the blade giving there is a smaller reaction in surface and normal pressure on the calibrated spring and b) if the spring pressure increases and the wind pressure decreases, by the deformation surface, there is an angle and equilibrium point for each wind speed and total rated power of the wind turbine can be constant.-

**1B- Double blades** in this case each unit of the previous blade divides into two similar ones, with the same peculiar characteristics, with the singularity that in the same project smaller elements are available, with several advantages in large aero-engines for simple manufacture, handling, transport, installation, maintenance, replacement, etc., although all the components are duplicated, before which there will be a point of inflection, between advantages and disadvantages.

In this case the split is linear with a common axis, **(1A), (****figure 5 A)** and in a second case the **split** is parallel, (**1 B**), (**figure 4B**), and the difference in area is determined by difference of size between both pieces. -

In **figure 5** **B,** the **split** alternate. Perhaps the coefficient of efficiency of the set is slightly higher, but not only the wings and their components are duplicated, but also the trusses, and except in some particular case of large sizes or another particularity, this alternative is generally less favorable than the split in aligned **(see** **Figures 1** **and** **5A****). 2- Axis** of rotation of the blades, single or double, in an inner joint with the end sections of the trusses, whose angle will depend on the balance between the moments and forces acting on the blade if it is simple or the blades if they are double. If it is simple or double, arranged in line or in parallel, they will only need one axis and if they are double and alternate then each one will need one in each independent truss piece as if it were simple.-

**3- B**ars, with frontal perimeter **bracing** of the knots of the radial reticular trusses, on both sides of the rotor, the front and the rear, being composed of square hollow metal sections, in metal profiles, depending on the size of the rotor. It is advised that the section should be square and hollow, for greater resistance to buckling and less material, in the two normal directions in which it can occur. This feature determines the optimum dimensions of each bar, since they are the longest, although adequate tensioning will be used to work all of them under traction, because in reality it is a variety of regular knots located on the same plan.

**4- c and t, Bars of radial**, square, hollow, metallic and different cross-section trusses depending on if they work under tension (t) and compression (c), (calculated as buckling as semi-embedded welded knots), vertex of the **tower.** Side limiters are possible at the bottom of the pillars of the tower and the outer perimeter of the rotor. The transmission belt also collaborates in these stabilizing functions of the lateral buckling of the rotor plane.

Thus, the loads and efforts are ordinary problems of resistance of materials and calculation of thrusts of fluid mechanics, all the rods are reunited, whose efforts are alternating in the two directions of the plane of the rotor, in this case, all the knots they are calculated to buckling.

The **external** forces correspond to the own weight, the external thrusts of the wind and the perimeter friction of the transmission belt, all of them being limited by the damped controlled springs and the one of the tensor of the transmission belt.

**5 Pillars** of the compression tower, for its work in compression and buckling in any direction, adopts the classic circular hollow section, with or without reduction of section, according to its length and at the discretion of the manufacturer.

**6 Braces** of the tower to traction, of diverse sections, emphasizing the tubular sections for their collaboration, in all the senses, in a greater rigidity the of the structure as a whole.

7 **Transmission belt** constituted by a polygonal formation determined by th e connecting knots of the rods of the rotor trusses located in the same vertical plane, of the ones with the largest diameter, as a multiplying part of the high revolutions required in the axes of the corresponding pulleys that complete the relationship between the rotor motor pairs and the axes of the pulleys that **transmit the rotor torque** to the traction **axes** of the multiple receiver **devices** by pressure and friction.

As for the material of the belts, fiber types similar to the Kevlar type are suitable, used in port and cargo cranes under construction in general, even the metallic chains of perfect adaptation in linear and curved traction, in straight and circular sections of the knots, and the axes of the pulleys. This element is easy to install, maintain and replace and operate with the collaboration of the appropriate lower tension, spring type, hydraulic cylinders or similar of great development.

**8 Conversion train** is the set of pulleys, whose number may seem excessive, because they are needed not only by change of direction and rotation speeds of each mechanism of practical application, but also in order that the angle or arc of contact between the belt and the shaft is as great as possible due to its great influence on the tension of the belt avoiding slippage and power limitation.

**9 Tension pulley** with spring or adjustable shock absorber, in the lower part of the transmission belt that controls the tension of the transmission belt in order to be superior to the sliding of the belt depending on the **tension** at the entrance and Belt outlet, contact arc and coefficient of friction between the materials of the belt and the pulley shaft.

In the calculation to be made on each pulley it will be observed that the tension corresponds to the uniform speed of the belt, with the power it absorbs or with the difference of **tensions** at the entrance and exit of each, so the sum of tension differences corresponds to the belt at the polygon of the rotor. This calculation does not offer major difficulty. **10 Platform,** metallic location of the bases of the supports and braces constituting the base support of the rotor of the tower, assembly, manipulation and maintenance of the components of the transmission and transmitting and receiving mechanisms, taking into account that the set has to adopt a determined position according to the direction of the wind which means that the rotor plane or rotation plane should always be oriented to the normal wind direction.

For this purpose, a **cylinder that is** capable of pivoting in the interior of another slightly larger diameter, either directly or interposed of bushings or bearings, with the proposal of a lightly greased "dulled" bushing is available for this purpose on the underside of the platform. The outer cylinder is embedded to the general foundation, which in this case, given its volume and location, will be used as the foundation mass of the whole.

The correct orientation of the rotor plane is obtained automatically with the eccentric thrust of the wind on the whole of the wind turbine.

The above device refers to units on land. If it was about technology in the sea, the platform is identified with the cover of the accumulator enclosure and flotation raft.

**11 Cylinder for embedding** the support of the tower, and orientation of the mill, has been described in the previous section, although that simple construction in appearance, can serve up to certain powers, from which the moment of embedment is insufficient a system of heavy lanes and taxiways and the support of a drag train must be provided. On the other hand, the small speed of orientation that is needed is favorable.

**12 Foundation,** includes the infrastructure of the Wind Unit, with the foundation, usually cylindrical, as an element resistant to all external forces to the set, both of loads, overloads and very important moments of overturning, with insulation factory coating, whose interior of large volume is used as a thermal accumulator for the storage of thermal material, that is to say, resistant to temperature and high specific heat, among which the ceramic material stands out for its favorable characteristics, with a wide range of possibilities.

**13** Contact **pulleys** with the rotor transmission belt absorbing part of the power transmitted in the form of torque to the common shaft with the corresponding receiver. The power absorbed will depend on the power or reaction of the receiving device, because if it is higher there would be a slip with loss of power or failure by heating.-

**14 Motor axes** of the pulleys acting on the last multiple receiving devices of the power derived from the motor torque of the turbine.-

In this case, they will be thermal **converters or steam** generator that is to convert mechanical work of the rotor into **steam heat** for its direct use or storage in the accumulator for its extraction and transformation in mechanical work, in closed circuit, by means of the endothermic turbine.-

**15 Rotor power receiving devices,** alternators, compressors, hydraulic pumps, agitators, mechanical and multi-plate thermal, drums for heating a closed water vapor circuit with the floating platform or ground accumulator.-The most widely used devices are the aforementioned converters, because they are the beginning of the establishment of distribution networks depending on the power of the unit as a wind energy source.-

**16 Conventional bearings** for the regulation and orientation, of the base platform on the foundation and accumulator. They are only necessary on land, since floating platforms revolve around the anchoring of the sea bottom and the base platforms are the deck itself.-

**17 Conventional plates** for supporting the axes of the pulleys in the assembly of the conversion train, fixed to the base platform, except for the pulley of the tensor on the dock or bottom cushion of the foundation.-

**18c Bracing bars** in the plane of the radial reticular trusses of the rotor that work in **compression,** being calculated at buckling loads so it is lower than the admissible. For this purpose, all these bars, in principle, special steel metal are square hollow section, being easy to calculate the appropriate section.-

**18 t Bracing bars** in the plane of the radial reticular trusses of the rotor that work **by traction** calculated by the permissible charges. These are similar to the previous ones for ease of execution and union since only the magnitude of their section is limited.

**19 Flanges** of union of the inner ends of the radial reticular trusses with the free axis of the rotor, whose most notable efforts are the thrusts of the blades by the action of the wind and the braking effect of the transmission belt on the friction points with the knots of the trusses.-

**20 Union** of hollow square bars in all the knots of the reticular assembly.-

**21 Damper spring** or similar located on the back of the blades to control its rotation and orientation depending on the wind pressure on the long side of the blade, with its reaction to deformation.-Since the force of the wind varies with its intensity and the rotation of the blade varies the intercept surface in the opposite direction, it will reach a point where the action of the wind and the reaction of the spring independent of the wind regime are equalized.

**21a Top of angle** of "incidence" nominal is the minimum and corresponding to the fixed as the **nominal wind speed,** in each project. At this point the wind thrust corresponds to the nominal speed of the project being equal to the uniform fixed reaction of the damping spring of the blade rotation.-When the wind is higher it will tend to rotate due to higher pressure but with a limitation due to the fact that with the increase of the rotation the effective section of the blade decreases.-

In this way, the equilibrium point influences and defines the maximum overturning thrust of the tower, the internal tensions of the trusses and the rotor and the power of the wind turbine. It has been spoken about maximums of the wind turbine, but the common regime of operation depends on the reaction of the receiving mechanisms, in this case the most normal one is the converters of the motor pairs in heated steam, which acts as a brake and clutch in conventional vehicles.-

In this respect, the **control of the assembly,** both in speed and in pressures, corresponds to the pressure between the two series of discs of the converters of the motor pairs in **steam heat.**-

**22 Thermal accumulator in foundations on land, and floating platforms,** as a **ship,** in marine locations, to support the entire structure of the rotor, bracket and mechanisms, which serves, due to its large stabilizing and floating volume, as a foundation and thermal energy accumulator, in closed **water steam** circuit with friction disc converters and high speed agitators.-

It is used for storage of heat at ambient pressure so that if you want to extract at high pressures, you have a **"serpentine" (Sav),** inside in direct connection with the distribution and endothermic transformation turbines.-At the same time, it is possible to use as a displacement ship and optimal locations that can be used at the same time as "cistern wind units" for thermal distribution "with energy extraction and distribution" with steam, on any coast.-

Due to the above characteristics, it has the advantage that the whole can be built on land and be moved to any maritime position and navigable space.-As a complement, it is possible to install water desalination membranes in depths of more than 600 meters and with the same multi-purpose cistern systems to supply drinking water on land.-

**23 Anchoring** of the **wind unit,** as a **tanker,** with its platform and conversion and transformation mechanisms, on any sea bottom in the same way as large cargo ships and similar, which allows convenient, automatic and free guidance in the convenient direction of the wind.-

**24 Moorage braces** of the floating platform of the **"wind unit"** in the form of anchorage at the sea bottom.-

**25 Tension spring tensor** belt.-

**26 Braces of the rotor tower,** between the vertex of pillars and the platform of several sections, highlighting the tubular sections for their collaboration, in all respects, in a greater rigidity of the structural set.-

**27 Fixed drum or outer cylindrical chamber** of the thermal multi-disk converter, with fixation of the external disks (bb) and (dd), and support of the inner shaft (30), through the side covers (34), with fixation of the internal discs of friction (aa) and (cc), constituting a heater and **transforming** element of the torque of the wind rotor in thermal energy, extracted by means of steam circulation, between the separation of series pairs, in closed circuit, with the thermal accumulator or similar.-

**28 Internal and external cylinder,** narrow and fixed to the shaft and the drum, acting as separators between inner and outer discs, respectively.-

**29 Fixating (but also sliding) bars** of the external discs of the drum and internal discs of the shaft, in order to maintain the contact between both series of discs and with the same pressure between all of them.--

**30 Tractor** shaft, of the internal friction discs, which represents the torque of the rotor of the mill and the power generated by it.-

**31 Plates fixated** to the shaft, **support of the pressure** spring of the inner plates on the outside, which by friction, absorbs energy from the rotor.

**32 Pressure-controlled spring** on the set of inner and outer discs, which determines the "braking" effort of the friction of the two series of discs at the same time that corresponds to the energy absorbed and converted into thermal energy of **water vapor** circulating. In short the power generated by the **"wind unit".**

**33 Turbines of vanes,** of internal pressure of the fluid, of opposite direction, to increase the density of the fluid and generate the circulation and greater flow, in closed circuit, of water vapor with the accumulator.

**34 Side covers of the external drum** with entry on the outside of the cooled steam and exit through the heated inner shaft towards the accumulator in closed circuit.

**35 Internal chamber** of the tractor shaft of the **endothermic turbine,** which communicates the two spirals, compression and expansion, in a module of two inverse elements.

**36 Tractor shaft,** of an endothermic module of two inverse elements, constituent of a common inner chamber and shaft.

**37 Conventional bearings** on shafts of high-speed turbines.

**38 Conventional transmission belts,** Kevlar type or similar.

**39 Motor pairs** of conventional practical applications.

**40 Injection of combustibles** in environmental endothermic turbines, for cases of emergency or temporary replacement, similar to internal combustion engines.

**41 combustible rod** of low radioactive material.

**41a Split combustible rod,** with separate alternating pellets **angle of the blades** with the rotor plane.
**a-a Rotating internal** mobile disks with internal communication in converters
**b-b External fixated disks** with internal communication in converters
**c-c Internal mobile rotary disks** with external communication in converters
**External fixated disks with** external communication in converters
**e-e Communication** external in closed circuit of cooled steam inlet and outlet of heated steam water fluid in converter chambers.

**A1 Lower side of the blade,** in relation to the axis of articulation with the end sections of the trusses.

**A2 Larger side of the blade,** relative to the previous articulation axis with the truss

**AT Thermal accumulator,** heat storage, by heating the thermal material of its interior, by the action of the circulation of heated **water vapor** coming from the conversion of the kinetic energy of the transmission belt into thermal, through the friction of the series of two reverse rotation discs.

**ATc Vapor of hot water** from the thermal accumulator at atmospheric pressure. **ATf Chilled water vapor** to the thermal storage tank.

**C Steam of heated water,** coming from the energy conversion of mechanical kinetic energy into thermal energy.

**Ce Outdoor chamber,** in double endothermic turbines and high pressures and temperatures

**C EXT outer shell** includes the complete protection of the exterior of the enclosure.

**C INT inner shell** includes the protection of spiral turbines.

**Ci Interior chamber,** in double endothermic turbines and high pressures and temperatures.

**Cl Interior chamber,** energy transformation with heat **water steam** in mechanical work.

**C2** Conventional nuclear module tube (fuel rods).

**Ec Compression spiral,** in double endothermic turbines at high and low pressures and temperatures.

**Ee Spiral of water vapor expansion,** coming from the outer chamber, heated by a heat source, in closed circuit between chambers and spirals, or similar, of the endothermic heat transformation in torque.

**F Chilled water vapor,** coming from the energy transformation.

**MAe Air with steam heated from the environment.-MAf Air with water vapor cooled** into the environment.

**MT Thermal material of the thermal accumulator,** ordinary ceramics or refractory arranged in series for circulation of fluids.

**P1 Wind thrust** on the larger side of the blades.

**P2 Wind thrust** on the smaller side of the blades.

**Px Normal thrust** of the wind on the blades.

**R Torsion spring thrust due** to reaction to the action of P1-P2.

**Sva Serpentin,** inside the accumulator capturing the heat of the thermal material used for heating the steam at high pressure and temperature, flowing in the direction of a direct practical application or an endothermic turbine for the transformation of its thermal energy into mechanical work and to the coil for its heating in circuit, at high pressure and temperature.

**TAB Double low pressure turbine,** for energy transformation of water vapor at low pressures and high and low temperatures.

**TAP Double turbine of high pressure,** for energy transformation of water vapor at high pressures and temperatures in closed circuits (cc).

**T E Transformer or power converter,** multi-disc friction drum.

**T2a Inner tubes shafts of the two coils,** communicated or independent.

**VAB Vapor of water at low pressure,** coming from the thermal accumulator and open circuits (ca).

**AB (C-F) ac Water vapor in low pressure** heated or cooled in open circuit.

**VAC Steam of heated water** of the thermal accumulator.

**VAP High pressure water vapor,** coming from the coil of the thermal accumulator. **VAP (C-F) cc Water vapor in high pressure**, heated or cooled in closed energy circuit,
**x - x Blade section**

| | |
|---|---|
| 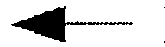 | Direction of circulation of the fluid. |
| 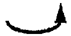 | Direction of rotation of the turbine |
| 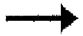 | **Direction** of thrusts or **water vapor** flows |
| 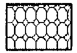 | **Filling of ceramic type thermal material** |
| 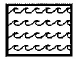 | **Seawater filling.-** |

**F) Exhibition of an embodiment.-In** the previous exhibition and in the corresponding figures, the process of execution of any mechanism or component of the mill, composed in a special way by the metallic reticular rotor based on hollow bars of square section, is perfectly reflected, since the main actions act on the planes normal and parallel to the rotor axis, which determines the buckling load.

Composition of a conventional model of Autonomous Wind Power Unit, whose plans correspond to the figures of the patent of radial reticular rotor, composed of: Tower or cable-stayed support on fixed or rotating fixed platform.

12 Trusses in bracket and lattice with self-regulating aerodynamic blades.
1 Belt of transmission between rotor and pulleys of application
6 Pulleys and tractor shafts of receiving devices
12 Multi-disc friction converters, steam generators-
1 Thermal accumulator of ceramic material and "serpentine" pressure, which - serves as fixed or floating foundation of the set in the sea.

x Endothermic spiral turbines for heat transformation in mechanic work.

### 1 Remote water vapor distribution network

The support efforts are normal in towers and vertical structures and those of **the transmission** are perfectly supported **by flexible belts,** similar to slings, **Kevlar** type or similar, load cranes in ports and similar, and those of **transformation** by conventional devices of all types, such as electrical or mechanical in general, **(see** **figures 3****,** **9****,** **10** **and** **11****).**

The structural components are dimensioned as a function of the stresses and moments that occur in the rotor and in the support, due to those determined as normal and transversal thrusts of the wind by the damped spring or dock.

The balance of the whole set is obtained by the reactions at the points of articulation and embedment, by means of materials of density and normal resistance in metallic structures, mainly steel and in the case of the friction discs will resort to materials of maximum resistance as steels resistant to wear as Widia, etc., and ceramic materials such as stoneware, alumina and other high density, in respective efficiency tests. Both the accumulator and the endothermic turbines are determined according to the flow rates and the pressures of the project, which will be set as normal of 125 k/cm² and 425 °C.

At the same time the regulation and control devices, anemometric station, monitoring systems and distance controls, etc. will be installed, according to conventional methods existing in the market.

### G) General practical applications

It is applicable to all types of energy installations, thermal, hydraulic, pneumatic, mechanical, crushing of aggregates and minerals, machinery, construction, etc., of the manufacturing industry in general, public services of lighting, water supply and purification, etc., and agricultural and livestock activities, and domestic consumption, and can be mentioned others such as desalination of sea water, transfers, recharge of aquifers, driving land mobile, nautical, aeronautics, etc.

Accumulation and extraction are complementary and convenient parts so that this energy source has the character of an autonomous and independent unit. The "joint solidarity" is original although some of its components are already known. The nuclear order projects will be treated with strict legal regulations and always with waste treatment of low radioactivity.

### Conclusions

The execution of the complete wind unit is simple, given that it is a structure similar to a metal in conventional construction, being only necessary material means and abundant components already found in the common market; assembly, accessibility and maintenance are simple to make happen, anywhere, to meet all public and private needs, so scarce in large areas of the Globe. Most of the current energy is thermal and its total replacement in the short term is unviable, so that the new extensions will be new "sustainable" projects, such as the present wind, with gradual reduction of existing and more efficient consumption of combustibles with the consequent economic and environmental benefits. The sources of combustion heat would be replaced by progressive thermo-eolic supports, reducing the consumption of fossil fuels while maintaining the rest of the facilities. It is a quick and economical alternative to solve the problem of **climate change** and **CO2 emissions.**

## Claims

1. Autonomous sustainable wind unit, the unit comprising:
a support, with vertical tubular pillars and inclined braces according to the direction of the wind, which support the thrusts on the plane of rotation of the wind turbine, being installed on a platform of supported rotating base, which if it is on land, by a firm foundation by means of a cylindrical pivot, in another cylinder, with or without a spile, embedded in the foundation, which allows it to rotate and orient itself in a convenient direction of the wind, and if it is on a floating platform with a single anchorage on the seabed, also allows it to self-orientate in the convenient direction of the wind, comprising a low tower turbine, whose rotor is located at a small height, on the ground or surface of the water, with less effort due to the lower tipping moment of the support and easier assembly, handling and maintenance of all the mechanisms, with reduction of the risks and increase of the safety;
a wind rotor, constituted by radial reticular trusses of square metal bars welded and braced, with greater load of buckling, in normal planes, supporting the normal and horizontal thrusts, to the plane of the rotor, of the blades located in their extreme sections, so that there are triangular structures in lattice and in bracket, in the axis of the rotor, wherein the longer bars work to traction and the smaller ones, by the buckling, to compression and the perimeter knots of the construction, in the same plane, serve as support and drag of the tangential thrust of the wind on the blades located in the end sections of the trusses, constituting a coherent mechanism of transmission of torque energy of the rotor, and the power captured is retransmitted by the interposition of a linear element, to mechanisms freely arranged on the base platform, converters, compressors hydraulic pumps, electric generators;
several blades consisting of aerodynamic plates of light and resistant material, configured in trapezoidal sectors articulated in the ending sections of the trusses with off-center axes so that the wind thrust on each side of the axis is different tending to turn into the direction of the greater one. With the interposition of a conventional spring, the angle of the blade is controlled, independently of the wind speed and the angle of the blades, so that the torque and rotation of the rotor is controlled and fixed with the pressure on the discs of the converters, as a braking;
a linear transmission, of the rotor motor torque, consisting of linear flexible and resistant elements supported and dragged by a flat series of perimeter bars of the rotor, constituting a transmission belt of the tangential thrust of the wind, on the pairs of blades of the end sections of the trusses, constituting a transmitter of the rotation of the rotor in another faster rotation, depending on the relationship between the diameter of the perimeter drag of the rotor and that of the pulleys of the receiving devices, arranged on the base platform, with a tensor to control the minimum tension of drag adhesion at the perimeter points of the rotor and that of the pulleys;
a base platform that constitutes the support of the tower or support and the location of the mechanical devices receiving the energy of the wind rotor, the auxiliary and control means, and that is supported, articulated and oriented in the direction of the wind by means of a cylindrical pivot in the lower base, which rotates inside another cylinder, embedded in the ground foundation or directly on the deck of the floating platform in the sea, which, on the ground, allow the orientation of the wind rotor in the convenient sense with respect to the direction of the wind and in the sea, the orientation is allowed by the anchorage of the bottom;
a fixed foundation on the ground and a floating platform at sea, as a support for all possible installations and multiple common functions, as a foundation for its great mass and size, and the enclosure as an accumulator, preferably made of ceramic material, for its lower density and built as tugboat or ship;
converters, as receiving devices for energy conversion of the torque generated by the wind rotor for direct use according to wind intermittence or for thermal storage, by means of an agitator or multiple friction plate for converting the kinetic energy of the receiver into heat by means of the friction, by controlled contact and pressure, of two series of alternate discs, some fixed to the outer drum or chamber and others to the internal rotation axis so while using it as a converter element the water vapor, flowing through the free surfaces between each pair of discs, it captures the heat of dynamic friction and transmits it directly, in closed circuit, to the thermal accumulator, the braking is equal to the power generated by the blades;
a thermal accumulator, constituted by a closed enclosure, with its corresponding exterior insulation, so that in its interior there are abundant thermal materials and high specific heat, as ceramic material, with technical characteristics as specific heat, support of high temperatures, a texture of low density and high permeability, which facilitates a function as a fixed foundation on land and another as nautical floating configuration in the sea, with which you can use water vapor at high temperatures for both accumulation as for the extraction, according to endothermic turbines of water vapor, previous installation of coil to have the necessary high pressures, at the same time that by flotation it serves for all maritime use, of location, transport and mobility, the accumulated thermal energy can be used for travelling, or supplied directly to the coast, or used for supplying desalinated water;
an endothermic steam turbine at low pressures and high temperatures, with two elements of radial section in spiral with common axis and inverse directions, and in such arrangement that,
first, in the same direction of rotation of axis one works with contraction and another one in expansion, that is, the two necessary functions so in fast rotations, the water vapor, heated in circulation, in closed circuit, through the accumulator, at environmental pressure, contracts in the first of them, conserving the temperature and pressure, and when passing the common inner tubular shaft through the second expansion loses temperature and pressure whose energies are transformed into an increase in tangential pressure on the walls of the turbine or mechanical work, and this in torque that acts on the common axis, so that the difference, between the motor pairs of the two basic elements of turbine, is the energy efficiency of the process,
secondly, if a pressure coil is placed inside the accumulator, the water vapor can be extracted at high pressures and temperatures and, reducing the size of the endothermic turbine and the installations, as an alternative to compact turbines of greater power and smaller size, when treating high density water vapor that simplifies the process and increases the efficiency and performance; and
an endothermic turbine of high pressures and temperatures, in closed circuit, with a source of heat of any origin, which can be used in cases of emergency, repair or replacement.

## Patentansprüche

1. Autonome nachhaltige Windkraftanlage, wobei die Einheit umfasst: eine Stütze mit vertikalen Rohrpfeilern und geneigten Streben entsprechend der Windrichtung, die die Schübe auf der Rotationsebene der Windkraftanlage abstützen, die auf einer Stützplattform installiert ist drehbare Basis, die, wenn sie sich an Land befindet, durch ein festes Fundament mittels eines zylindrischen Drehzapfens in einem anderen Zylinder mit oder ohne Spieß, der in das Fundament eingebettet ist, wodurch sie sich drehen und in einer geeigneten Richtung ausrichten kann Wind, und wenn es sich auf einer schwimmenden Plattform mit einer einzigen Verankerung auf dem Meeresboden befindet, ermöglicht es ihm auch, sich selbst in der geeigneten Windrichtung auszurichten, bestehend aus einer niedrigen Turmturbine, deren Rotor auf einer geringen Höhe angeordnet ist Boden oder Wasseroberfläche, mit weniger Kraftaufwand aufgrund des geringeren Kippmoments der Stütze und einfacherer Montage, Handhabung und Wartung aller Mechanismen, mit Verringerung der Risiken und Erhöhung der Sicherheit; ein Windrotor, bestehend aus radialen Gitterträgern aus geschweißten und verstrebten Vierkantmetallstäben mit größerer Knicklast in normalen Ebenen, die die normalen und horizontalen Stöße der in ihren äußersten Abschnitten befindlichen Blätter zur Rotorebene tragen, so dass dreieckige Strukturen in Gitter und in Klammern in der Achse des Rotors vorhanden sind, wobei die längeren Stäbe auf Zug und die kleineren durch das Knicken auf Druck und die Umfangsknoten der Konstruktion in derselben Ebene arbeiten, dienen als Unterstützung und Widerstand des tangentialen Schubs des Windes auf die Blätter, die sich in den Endabschnitten der Träger befinden, und bilden einen kohärenten Mechanismus zur Übertragung der Drehmomentenergie des Rotors, und die aufgenommene Kraft wird durch die Zwischenschaltung eines linearen Elements zurückübertragen , auf der Basisplattform frei angeordnete Mechanismen, Konverter, Pumpen, elektrische Generatoren; Kompressoren hydraulisch mehrere Flügel, bestehend aus aerodynamischen Platten aus leichtem und widerstandsfähigem Material, die in trapezförmigen Sektoren konfiguriert sind, die in den Endabschnitten der Fachwerkträger mit außermittigen Achsen artikuliert sind, so dass der Windschub auf jeder Seite der Achse unterschiedlich ist und dazu neigt, sich in die Richtung des zu drehen größere. Unter Zwischenschaltung einer herkömmlichen Feder wird der Blattwinkel unabhängig von der Windgeschwindigkeit und dem Winkel der Blätter gesteuert, so dass das Drehmoment und die Drehung des Rotors mit dem Druck auf die Scheiben der Wandler gesteuert und fixiert werden , als Bremse; eine lineare Übertragung des Drehmoments des Rotormotors, bestehend aus linearen flexiblen und widerstandsfähigen Elementen, die von einer flachen Reihe von Umfangsstangen des Rotors getragen und gezogen werden und einen Übertragungsriemen des tangentialen Schubs des Windes bilden, auf die Blattpaare des Endabschnitte der Traversen, die einen Übertrager der Rotation des Rotors in einer anderen schnelleren Rotation bilden, abhängig von der Beziehung zwischen dem Durchmesser des Umfangswiderstands des Rotors und dem der Riemenscheiben der Empfangsvorrichtungen, die auf der Basisplattform angeordnet sind, mit einem Tensor, um die Mindestspannung der Widerstandshaftung an den Umfangspunkten des Rotors und der Riemenscheiben zu steuern; eine Basisplattform, die die Stütze des Turms oder der Stütze und den Ort der mechanischen Vorrichtungen darstellt, die die Energie des Windrotors, der Hilfs- und Steuermittel empfangen, und die mittels dieser gestützt, gelenkig und in Windrichtung ausgerichtet ist ein zylindrischer Drehpunkt in der unteren Basis, der sich in einem anderen Zylinder dreht, eingebettet in das Bodenfundament oder direkt auf dem Deck der schwimmenden Plattform im Meer, die am Boden die Ausrichtung des Windrotors in der bequem erlaubten Weise ermöglichen Sinn in Bezug auf die Richtung des Windes und im Meer, die Ausrichtung ist die Verankerung des Bodens; ein festes Fundament auf dem Boden und eine schwimmende Plattform auf See als Träger für alle möglichen Installationen und mehrere gemeinsame Funktionen, als Fundament für seine große Masse und Größe und das Gehäuse als Akkumulator, vorzugsweise aus keramischem Material, für seine geringere Dichte und gebaut als Schlepper oder Schiff; Konverter, als Empfangsgeräte zur Energieumwandlung des vom Windrotor erzeugten Drehmoments zur direkten Nutzung nach Windunterbrechung oder zur thermischen Speicherung, mittels eines Rührwerks oder einer Mehrfachreibungsplatte zum Umwandeln der kinetischen Energie des Empfängers in Wärme mittels der Reibung, durch kontrollierten Kontakt und Druck, von zwei Reihen von abwechselnden Scheiben, von denen einige an der äußeren Trommel oder Kammer und andere an der Innenrotationsachse und nutzt dabei als Wandlerelement den Wasserdampf, der durch die freien Flächen zwischen den einzelnen Scheibenpaaren strömt, die Gleitreibungswärme aufnimmt und direkt, im geschlossenen Kreislauf, an den Wärmespeicher weiterleitet, der die Bremsung darstellt gleich der von den Klingen erzeugten Leistung; ein Wärmespeicher, bestehend aus einem geschlossenen Gehäuse mit entsprechender Außenisolierung, so dass in seinem Inneren reichlich thermische Materialien und eine hohe spezifische Wärme vorhanden sind, als keramisches Material mit technischen Eigenschaften wie spezifische Wärme, Unterstützung hoher Temperaturen, eine Textur von geringe Dichte und hohe Durchlässigkeit, was eine Funktion als festes Fundament an Land und eine andere als nautische schwimmende Konfiguration im Meer ermöglicht, mit der Sie Wasserdampf bei hohen Temperaturen sowohl zur Akkumulation als auch zur Extraktion verwenden können, gemäß endothermen Wasserturbinen Dampf, vorherige Installation der Spule, um die notwendigen hohen Drücke zu haben, gleichzeitig dient es durch Flotation allen maritimen Nutzungen, dem Standort, dem Transport und der Mobilität, die angesammelte Wärmeenergie kann zum Reisen verwendet oder direkt an die Küste geliefert werden , oder zur Bereitstellung von entsalztem Wasser verwendet werden; eine endotherme Dampfturbine bei niedrigen Beibehaltung der Temperatur und des Drucks, und wenn die gemeinsame innere röhrenförmige Welle durch die zweite Erweiterung geht, verliert sie an Temperatur und Druck, deren Energien in eine Erhöhung des Tangentialdrucks an den Wänden der Turbine oder in mechanische Arbeit umgewandelt werden, und dies in ein Drehmoment, das auf die Turbine wirkt gemeinsame Achse, so dass der Unterschied zwischen den Motorpaaren der beiden Grundelemente der Turbine die Energieeffizienz des Prozesses ist, zweitens, wenn eine Druckspule im Inneren des Akkumulators platziert wird, kann der Wasserdampf bei hohen Drücken und extrahiert werden Temperaturen und Reduzierung der Größe der endothermen Turbine und der Anlagen als Alternative zu kompakten Turbinen mit größerer Leistung und kleinerer Größe bei der Behandlung von Wasserdampf mit hoher Dichte, was den Prozess vereinfacht und die Effizienz und Leistung erhöht; und eine endotherme Turbine mit hohen Drücken und Temperaturen im geschlossenen Kreislauf mit einer Wärmequelle jeglicher Herkunft, die im Notfall, bei Reparatur oder Austausch verwendet werden kann.

## Revendications

1. Unité éolienne durable autonome, l'unité comprenant : un support, avec des piliers tubulaires verticaux et des contreventements inclinés selon la direction du vent, qui supportent les poussées sur le plan de rotation de l'éolienne, étant installé sur une plate-forme de support base tournante, qui si elle est sur terre, par une fondation solide au moyen d'un pivot cylindrique, dans un autre cylindre, avec ou sans spire, encastrée dans la fondation, ce qui lui permet de tourner et de s'orienter dans une direction commode du vent, et s'il est sur une plate-forme flottante avec un seul ancrage sur le fond marin, lui permet également de s'orienter dans la direction convenable du vent, comprenant une turbine à tour basse, dont le rotor est situé à une faible hauteur, sur le au sol ou à la surface de l'eau, avec moins d'effort en raison du moment de basculement plus faible du support et un montage, une manipulation et un entretien plus faciles de tous les mécanismes, avec réduction des risques et augmentation de la sécurité ; un rotor éolien, constitué de fermes réticulaires radiales de barres métalliques carrées soudées et contreventées, avec une plus grande charge de flambage, dans des plans normaux, supportant les poussées normales et horizontales, au plan du rotor, des pales situées dans leurs sections extrêmes, de sorte qu'il existe des structures triangulaires en treillis et en étrier, dans l'axe du rotor, dans lesquelles les barres les plus longues travaillent à la traction et les plus petites, par le flambage, à la compression et les noeuds périphériques de la construction, dans le même plan, servent de support et de traînée de la poussée tangentielle du vent sur les pales situées dans les sections d'extrémité des fermes, constituant un mécanisme cohérent de transmission de l'énergie de couple du rotor, et la puissance captée est retransmise par l'interposition d'un élément linéaire , aux mécanismes disposés librement sur la plate-forme de base, convertisseurs, pompes, générateurs électriques ; compresseurs hydrauliques.
plusieurs pales constituées de plaques aérodynamiques en matériau léger et résistant, configurées en secteurs trapézoïdaux articulés dans les sections d'extrémité des fermes avec des axes décentrés de sorte que la poussée du vent de chaque côté de l'axe soit différente tendant à tourner dans la direction du plus grand. Avec l'interposition d'un ressort conventionnel, l'angle de la pale est contrôlé, indépendamment de la vitesse du vent et de l'angle des pales, de sorte que le couple et la rotation du rotor sont contrôlés et fixés avec la pression sur les disques des convertisseurs , comme frein ; une transmission linéaire, du couple moteur du rotor, constituée d'éléments linéaires flexibles et résistants supportés et entraînés par une série plate de barres périmétriques du rotor, constituant une courroie de transmission de la poussée tangentielle du vent, sur les paires de pales du sections d'extrémité des fermes, constituant un émetteur de la rotation du rotor dans une autre rotation plus rapide, en fonction de la relation entre le diamètre de la traînée périmétrique du rotor et celui des poulies des dispositifs de réception, disposés sur la plate-forme de base, avec un tenseur pour contrôler la tension minimale d'adhérence de la traînée aux points périphériques du rotor et à celui des poulies ; une plate-forme de base qui constitue le support de la tour ou support et l'emplacement des dispositifs mécaniques recevant l'énergie du rotor éolien, les moyens auxiliaires et de commande, et qui est supportée, articulée et orientée dans la direction du vent au moyen de un pivot cylindrique dans la base inférieure, qui tourne à l'intérieur d'un autre cylindre, encastré dans la fondation au sol ou directement sur le pont de la plate-forme flottante en mer, qui, au sol, permet l'orientation du rotor éolien dans la pratique permise par sens par rapport à la direction du vent et dans la mer, l'orientation est l'ancrage du fond ; une fondation fixe au sol et une plate-forme flottante en mer, comme support de toutes les installations possibles et de multiples fonctions communes, comme fondation pour sa grande masse et sa taille, et l'enceinte comme accumulateur, de préférence en matériau céramique, pour sa plus faible densité et construit comme remorqueur ou navire ; convertisseurs, en tant que dispositifs de réception pour la conversion d'énergie du couple généré par le rotor du vent pour une utilisation directe en fonction de l'intermittence du vent ou pour le stockage thermique, au moyen d'un agitateur ou d'une plaque à friction multiple pour convertir l'énergie cinétique du récepteur en chaleur au moyen de la friction, par contact et pression contrôlés, de deux séries de disques alternés, certains fixés au tambour ou à la chambre extérieure et d'autres à la rotation interne axe ainsi en l'utilisant comme élément convertisseur la vapeur d'eau, circulant à travers les surfaces libres entre chaque paire de disques, il capte la chaleur de frottement dynamique et la transmet directement, en circuit fermé, à l'accumulateur thermique, le freinage est égal à la puissance générée par les pales ; un accumulateur thermique, constitué d'une enceinte fermée, avec son isolation extérieure correspondante, de sorte qu'à l'intérieur il y ait des matériaux thermiques abondants et une chaleur spécifique élevée, comme un matériau céramique, avec des caractéristiques techniques comme chaleur spécifique, support de hautes températures, une texture de faible densité et haute perméabilité, ce qui facilite une fonction de fondation fixe sur terre et une autre de configuration nautique flottante dans la mer, avec laquelle vous pouvez utiliser de la vapeur d'eau à haute température pour l'accumulation et l'extraction, selon des turbines endothermiques d'eau vapeur, installation préalable du serpentin pour avoir les hautes pressions nécessaires, en même temps que par flottaison, il sert à tous les usages maritimes, de localisation, de transport et de mobilité, l'énergie thermique accumulée peut être utilisée pour les déplacements ou fournie directement à la côte , ou utilisé pour fournir de l'eau dessalée ; une turbine à vapeur endothermique à basses pressions et hautes températures, avec deux éléments de section radiale en spirale avec un axe commun et des directions inverses, et dans un tel agencement que, d'abord, dans le même sens de rotation d'axe, l'un travaille en contraction et l'autre en expansion, c'est-à-dire les deux fonctions nécessaires donc en rotations rapides, la vapeur d'eau, chauffée en circulation, en circuit fermé, à travers l'accumulateur, à la pression environnementale, se contracte dans le premier d'entre eux, en conservant la température et la pression, et lors du passage de l'arbre tubulaire intérieur commun à travers la deuxième expansion perd de la température et de la pression dont les énergies se transforment en une augmentation de la pression tangentielle sur les parois de la turbine ou du travail mécanique, et ceci en couple qui agit sur l'axe commun, de sorte que la différence, entre les couples moteurs des deux éléments de base de la turbine, soit le rendement énergétique du processus, d'autre part, si une bobine de pression est placé à l'intérieur de l'accumulateur, la vapeur d'eau peut être extraite à des pressions et des températures élevées et, en réduisant la taille de la turbine endothermique et des installations, en alternance ive aux turbines compactes de plus grande puissance et de plus petite taille, lors du traitement de la vapeur d'eau à haute densité qui simplifie le processus et augmente l'efficacité et les performances ; et une turbine endothermique à hautes pressions et températures, en circuit fermé, avec une source de chaleur de toute origine, pouvant être utilisée en cas d'urgence, de réparation ou de remplacement.
